(19) Europäisches Patentamt
European Patent Office
Office européen des brevets

(11) **EP 4 624 200 A1**

(12) # EUROPEAN PATENT APPLICATION
published in accordance with Art. 153(4) EPC

(43) Date of publication:
**01.10.2025 Bulletin 2025/40**

(21) Application number: **23894655.2**

(22) Date of filing: **22.11.2023**

(51) International Patent Classification (IPC):
***B60C 9/22*** (2006.01) ***B60C 1/00*** (2006.01)
***B60C 9/00*** (2006.01) ***C08L 7/00*** (2006.01)
***C08L 9/06*** (2006.01) ***C08L 15/00*** (2006.01)

(52) Cooperative Patent Classification (CPC):
**B60C 1/00; B60C 9/00; B60C 9/22; C08L 7/00; C08L 9/06; C08L 15/00**

(86) International application number:
**PCT/JP2023/042077**

(87) International publication number:
**WO 2024/111651 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 JP 2022188761**

(71) Applicant: **BRIDGESTONE CORPORATION**
**Chuo-ku**
**Tokyo 104-8340 (JP)**

(72) Inventors:
- **KAWASHIMA, Masahiro**
  **Tokyo 104-8340 (JP)**
- **KAWASHIMA, Keisuke**
  **Tokyo 104-8340 (JP)**

(74) Representative: **Marks & Clerk LLP**
**15 Fetter Lane**
**London EC4A 1BW (GB)**

(54) **TIRE**

(57) To provide a tire that improves wet braking performance and fuel efficiency without reducing steering stability. The solution is a tire (1) including a tread rubber layer (9) located at the outermost surface of a tread portion (4), and a reinforcing layer that is located inward thereof in the tire radial direction and includes an organic fiber cord. The tread rubber layer (9) includes a rubber component, a resin component, and a filler. The rubber component includes an isoprene skeleton rubber and a styrene-butadiene rubber. At least one type of the styrene-butadiene rubber has a glass transition temperature of less than -40°C. The resin component has a difference of the SP value relative to that of the isoprene skeleton rubber of 1.40 $(cal/cm^3)^{1/2}$ or less. The tread rubber layer (9) satisfies the formula: mass ratio of resin component/isoprene skeleton rubber ≥ 0.5. The organic fiber cord has an elastic modulus at 1-2% elongation of 4.0 to 30 mN/(dtex·%).

FIG. 1

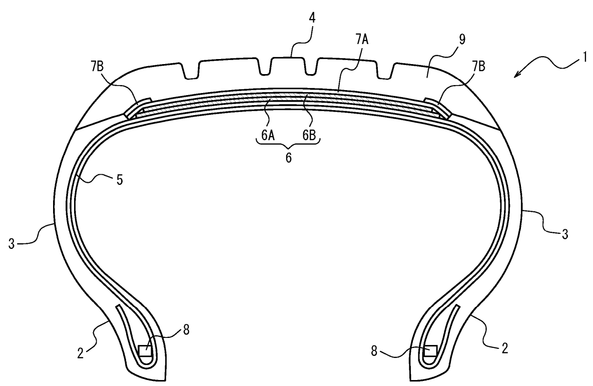


EP 4 624 200 A1

## Description

TECHNICAL FIELD

The present disclosure relates to a tire.

BACKGROUND

Conventionally, various studies have been conducted to improve braking performance on wet road surfaces (hereinafter abbreviated as "wet braking performance"), from the perspective of improving the safety of vehicles. For example, PTL 1 below discloses that the braking performance of a tire on both dry and wet road surfaces is improved by applying, to the tread rubber of the tire, a rubber composition obtained by blending a thermoplastic resin and a filler containing silica into a rubber component containing 70 mass% or more of natural rubber.

On the other hand, the demand for vehicles with lower fuel consumption is increasing due to the global movement towards reducing carbon dioxide emissions, driven by growing awareness of environmental issues. To address such a demand, improvement of fuel efficiency (reduction in rolling resistance) is also required for tire performances.

CITATION LIST

Patent Literature

PTL 1: WO 2015/079703 A1

SUMMARY

(Technical Problem)

However, studies conducted by the present inventors have revealed that, although the technique disclosed in PTL 1 can improve the wet braking performance of the tire, the addition of the resin (thermoplastic resin) serving as a softening component results in a decrease in the rigidity of the tread rubber, leading to a decrease in steering stability of the tire.

Accordingly, it would be helpful to solve the above-mentioned problem of the prior art and to provide a tire that has improved wet braking performance and high fuel efficiency without reducing steering stability.

(Solution to Problem)

The tire of the present disclosure for solving the above problem is as follows:

[1] A tire comprising a tread rubber layer located at an outermost surface of a tread portion, and a reinforcing layer that is located inward of the tread rubber layer in a tire radial direction and comprises an organic fiber cord,

wherein the tread rubber layer comprises a rubber component, a resin component, and a filler,
the rubber component comprises an isoprene skeleton rubber and a styrene-butadiene rubber,
a glass transition temperature of at least one type of the styrene-butadiene rubber is lower than -40°C,
the resin component has a difference of an SP value relative to an SP value of the isoprene skeleton rubber of 1.40 $(cal/cm^3)^{1/2}$ or less,
the tread rubber layer satisfies the following formula (1):
a mass ratio of the resin component / the isoprene skeleton rubber $\geq$ 0.5 ··· (1), and
the organic fiber cord in the reinforcing layer has an elastic modulus at 1-2% elongation of 4.0 to 30 mN/(dtex·%).

[2] The tire according to [1], wherein the resin component has a softening point of higher than 110°C and a polystyrene-equivalent weight-average molecular weight of 200 to 1600 g/mol.

[3] The tire according to [1] or [2], wherein the resin component is at least one selected from the group consisting of hydrogenated $C_5$-based resins, hydrogenated $C_5/C_9$-based resins, hydrogenated dicyclopentadiene-based resins, and hydrogenated terpene-based resins.

[4] The tire according to any one of [1] to [3], wherein the styrene-butadiene rubber is modified with a modifier having a functional group containing a nitrogen atom and an alkoxy group.

[5] The tire according to any one of [1] to [4], wherein the organic fiber cord has a breaking strength of 6.5 cN/dtex or

more and a breaking elongation of 10% or more.

[6] The tire according to any one of [1] to [5], wherein the organic fiber cord is a cord made of polyethylene terephthalate.

[7] The tire according to any one of [1] to [6], wherein the organic fiber cord has an elastic modulus at 7% elongation of 6.0 mN/(dtex·%) or more.

(Advantageous Effect)

According to the present disclosure, it is possible to provide a tire that has improved wet braking performance and high fuel efficiency without reducing steering stability.

BRIEF DESCRIPTION OF THE DRAWINGS

In the accompanying drawings:

FIG. 1 is a cross-sectional view of one embodiment of a tire of the present disclosure; and
FIG. 2 is a diagram illustrating the load-elongation curve of a cord.

DETAILED DESCRIPTION

The tire of the present disclosure is described below in detail with reference to embodiments thereof.

<Definitions>

The compounds described in this specification may be partially or entirely derived from fossil resources, biological resources such as plant resources, or recycled resources such as used tires. Alternatively, they may be derived from a mixture of two or more of fossil resources, biological resources, and recycled resources.

In the present specification, the glass transition temperature of an isoprene skeleton rubber or styrene-butadiene rubber is determined by recording a DSC curve while it is heated within a certain temperature range in accordance with ISO 22768:2006. The peak top (inflection point) of the DSC differential curve is defined as the glass transition temperature.

In the present specification, the SP values (solubility parameter) of an isoprene skeleton rubber, a styrene-butadiene rubber, and resin components are calculated according to the Fedors method.

In the present specification, the softening point of a resin component is measured in accordance with JIS K2207-1996 (ring and ball method).

In the present specification, the weight-average molecular weight of a resin component is measured by gel permeation chromatography (GPC), and the polystyrene-equivalent value is calculated.

In the present specification, the elastic modulus at 1-2% elongation, the breaking strength, and the breaking elongation of the organic fiber cord are those measured at room temperature (23°C). In addition, various physical properties of the organic fiber cord are measured in accordance with JIS L 1013 "Test Methods for Filament Yarns of Chemical Fibers."

<Tire>

A tire of the present embodiment includes a tread rubber layer located at the outermost surface of a tread portion, and a reinforcing layer that is located inward of the tread rubber layer in the tire radial direction and includes an organic fiber cord. In the tire of the present embodiment, the tread rubber layer includes a rubber component, a resin component, and a filler, the rubber component includes an isoprene skeleton rubber and a styrene-butadiene rubber, the glass transition temperature of at least one type of the styrene-butadiene rubber is lower than -40°C, the resin component has a difference of the SP value relative to the SP value of the isoprene skeleton rubber of 1.40 $(cal/cm^3)^{1/2}$ or less, the tread rubber layer satisfies the following formula (1):

$$\text{the mass ratio of the resin component / the isoprene skeleton rubber} \geq 0.5 \quad (1),$$

and
the organic fiber cord in the reinforcing layer has an elastic modulus at 1-2% elongation of 4.0 to 30 mN/(dtex·%).

Since the tread rubber layer contains the resin component having a difference of the SP value relative to the SP value of the isoprene skeleton rubber of 1.40 $(cal/cm^3)^{1/2}$ or less, the wet braking performance of the tire of the present embodiment is improved.

However, merely including a resin component in the tread rubber layer results in a decrease in the high fuel efficiency of the tire. To address this issue, by including a styrene-butadiene rubber with a glass transition temperature lower than -40°C in the tread rubber layer, the dispersibility of the filler is improved, thereby compensating for the decrease in the fuel efficiency of the tire. Furthermore, by including an isoprene skeleton rubber in the tread rubber layer, the fracture strength can be increased, which in turn reduces the rolling resistance of the tire and enhances the high fuel efficiency.
Additionally, by setting the mass ratio of the resin component / the isoprene skeleton rubber in the tread rubber layer to be 0.5 or more, the wet braking performance of the tire can be further improved.
On the other hand, when a resin component serving as a softening component is included in the tread rubber layer, the rigidity of the tread rubber layer is decreased, leading to a reduction in the steering stability of the tire. In contrast, in the tire of the present embodiment, by disposing a reinforcing layer including an organic fiber cord having an elastic modulus at 1-2% elongation of 4.0 to 30 mN/(dtex·%) inward of the tread rubber layer in the tire radial direction, the rigidity of the tread portion of the tire is improved, thereby suppressing the decrease in steering stability of the tire.
Accordingly, the tire of the present embodiment has improved wet braking performance and high fuel efficiency without reducing steering stability.
One embodiment of the tire of the present disclosure is described in detail with reference to drawings.
FIG. 1 is a cross-sectional view of one embodiment of a tire according to the present disclosure. The tire 1 illustrated in FIG. 1 includes a pair of bead portions 2, a pair of sidewall portions 3, and a tread portion 4 extending on the both sidewall portions 3, a carcass 5 extending in a toroidal shape between the pair of bead portions 2 to reinforce these portions 2, 3, and 4, a belt 6 disposed outward of the crown portion of the carcass 5 in the tire radial direction, a belt reinforcing layer (also referred to as a "cap ply") 7A disposed to cover the entire belt 6 outward of the belt 6 in the tire radial direction, and a pair of belt reinforcing layers (also referred to as "layer plies") 7B disposed to cover only both ends of the belt reinforcing layer 7A.
The carcass 5 of the tire 1 illustrated in FIG. 1 is composed of one carcass ply, which is formed by coating multiple cords arranged in parallel, with a coating rubber. The carcass 5 has a main body portion extending in a toroidal shape between bead cores 8 embedded in the corresponding bead portions 2 and turn-up portions that are turned up radially outward from the inside to the outside in the tire width direction around the respective bead cores 8. However, in the tire of the present disclosure, the number of plies and the structure of the carcass 5 are not limited to these.
Furthermore, the belt 6 of the tire 1 illustrated in FIG. 1 is made of two belt layers 6A and 6B. However, in the tire of the present disclosure, the number of belt layers constituting the belt 6 is not limited to two, and the number of belt layers may be three or more. Here, the belt layers 6A and 6B are generally composed of metal cords or organic fiber cords (preferably steel cords) coated with rubber that extend inclined with respect to the tire equatorial plane. The two belt layers 6A and 6B are laminated such that the cords constituting the belt layers intersect each other across the tire equatorial plane, forming the belt 6.
In the tire 1 illustrated in FIG. 1, the belt reinforcing layers 7A and 7B are formed by coating organic fiber cords (reinforcing members) disposed substantially parallel to the tire circumferential direction (for example, at an angle of 0° to 5° relative to the tire circumferential direction), with a coating rubber. The belt reinforcing layers 7A and 7B are formed by continuously spirally winding a narrow-width strip prepared by coating the organic fiber cords with a coating rubber in the tire circumferential direction. In this case, the absence of joint portions in the tire circumferential direction improves tire uniformity, and the absence of joint portions prevents the concentration of strain at the joints.
It should be noted that while the tire 1 illustrated in FIG. 1 includes the belt reinforcing layers 7A and 7B, a tire in which either one or both of the belt reinforcing layers 7A and 7B are omitted is also an embodiment of the present disclosure. Additionally, in the tire 1 illustrated in FIG. 1, the belt reinforcing layers 7A and 7B are each composed of a single layer, but they may be each composed of two or more layers.
Furthermore, the tire 1 illustrated in FIG. 1 includes a tread rubber layer 9 located at the outermost surface of the tread portion 4, the tread rubber layer 9 includes a rubber component, a resin component, and a filler, the rubber component includes an isoprene skeleton rubber and a styrene-butadiene rubber, at least one type of the styrene-butadiene rubber has a glass transition temperature of less than -40°C, the resin component has a difference of the SP value with respect to the SP value of the isoprene skeleton rubber of 1.40 $(cal/cm^3)^{1/2}$ or less, and, furthermore, the tread rubber layer 9 satisfies the above formula (1), as detailed below.
It should be noted that the tire of the present disclosure only needs to include a tread rubber layer located at the outermost surface of a tread portion and a reinforcing layer that is located inward of the tread rubber layer in the tire radial direction and includes an organic fiber cord, and various modifications can be made. For example, the tread rubber layer 9 of the tire 1 illustrated in FIG. 1 can be divided into a cap rubber located on the outermost surface side and a base rubber located inward thereof in the tire radial direction.
Here, the reinforcing layer including the organic fiber cord is not particularly limited as long as it is located inward of the tread rubber layer 9 in the tire radial direction, and it may be, for example, any of the belt layers 6A and 6B or the belt reinforcing layers 7A and 7B of the tire 1 illustrated in FIG. 1. In one preferred embodiment, the reinforcing layer including the organic fiber cord is used preferably in at least one of the belt layer 6B (that is, the outermost layer in the tire radial

direction among the belt layers constituting the belt 6) and the belt reinforcing layers 7A and 7B of the tire 1 illustrated in FIG. 1, more preferably in at least one of the belt reinforcing layers 7A and 7B, and even more preferably in both of the belt reinforcing layers 7A and 7B.

<<Tread Rubber Layer>>

In the tire of the present embodiment, the tread rubber layer includes a rubber component, a resin component, and a filler. The tread rubber layer can be produced, for example, from a rubber composition containing the rubber component, the resin component, and the filler.

(Rubber Component)

The rubber component includes an isoprene skeleton rubber and a styrene-butadiene rubber, and may further include other rubber components.

- Isoprene Skeleton Rubber -

The isoprene skeleton rubber refers to rubber with isoprene units as the main skeleton thereof, examples thereof specifically include natural rubber (NR) and synthetic isoprene rubber (IR).

By including an isoprene skeleton rubber in the rubber component, the fracture strength of the tread rubber layer can be increased. As a result, the rolling resistance of a tire provided with the tread rubber layer can be reduced, and the high fuel efficiency can be improved, and the wear resistance of the tire can also be improved.

The content of the isoprene skeleton rubber in 100 parts by mass of the rubber component is preferably 1 to 80 parts by mass, and more preferably 1 to 40 parts by mass. When the content of the isoprene skeleton rubber in 100 parts by mass of the rubber component is 1 to 80 parts by mass, the fuel efficiency and wet braking performance of the tire can be further improved. Additionally, when the content of the isoprene skeleton rubber in 100 parts by mass of the rubber component is 1 to 40 parts by mass, the fuel efficiency and wet braking performance of the tire can be further improved. From the perspective of further enhancing the effects achieved by blending the isoprene skeleton rubber, the content of the isoprene skeleton rubber in 100 parts by mass of the rubber component is more preferably 10 parts by mass or more.

- Styrene-Butadiene Rubber -

The rubber component in the tread rubber layer includes styrene-butadiene rubber (SBR), and the glass transition temperature of at least one type of the styrene-butadiene rubber (SBR) is lower than -40°C, preferably -45°C or lower, more preferably -50°C or lower, and preferably higher than -90°C. When at least one type of styrene-butadiene rubber has a glass transition temperature lower than -40°C, the fuel efficiency and wear resistance of the tire can be sufficiently improved. Furthermore, a styrene-butadiene rubber with a glass transition temperature higher than -90°C is easier to synthesize.

The rubber component of the tread rubber layer may also include a styrene-butadiene rubber with a glass transition temperature of -40°C or higher.

The content of the styrene-butadiene rubber in 100 parts by mass of the rubber component is preferably 20 to 99 parts by mass, more preferably 30 to 99 parts by mass, more preferably 40 to 99 parts by mass, more preferably 50 to 99 parts by mass, and even more preferably 60 to 99 parts by mass. When the content of the styrene-butadiene rubber in 100 parts by mass of the rubber component is 60 to 99 parts by mass, the fuel efficiency and wet braking performance of the tire can be further improved.

The difference in SP values between the isoprene skeleton rubber and the styrene-butadiene rubber is preferably 0.3 $(cal/cm^3)^{1/2}$ or more, and more preferably 0.35 $(cal/cm^3)^{1/2}$ or more. When the difference in SP values between the isoprene skeleton rubber and the styrene-butadiene rubber is 0.3 $(cal/cm^3)^{1/2}$ or more, the isoprene skeleton rubber and the styrene-butadiene rubber tend to become incompatible.

The styrene-butadiene rubber preferably has a bound styrene content of less than 15 mass%. The bound styrene content of the styrene-butadiene rubber refers to the proportion of styrene units contained in the styrene-butadiene rubber. When the bound styrene content of the styrene-butadiene rubber is less than 15 mass%, the glass transition temperature tends to be lower. The bound styrene content of the styrene-butadiene rubber is more preferably 14 mass% or less, more preferably 13 mass% or less, and even more preferably 12 mass% or less. Moreover, from the perspective of the wear resistance of the tire, the bound styrene content of the styrene-butadiene rubber is preferably 5 mass% or more, more preferably 7 mass% or more, and even more preferably 8 mass% or more.

The bound styrene content of the styrene-butadiene rubber can be adjusted by the amount of monomer used in the polymerization of the styrene-butadiene rubber, the degree of polymerization, and other factors.

The styrene-butadiene rubber is preferably modified with a modifier having a functional group containing a nitrogen atom and an alkoxy group. When the styrene-butadiene rubber is modified with a modifier having a functional group containing a nitrogen atom and an alkoxy group, the balance between the wet braking performance, fuel efficiency, and wear resistance of the tire is improved, and in particular, the fuel efficiency and wear resistance can be further enhanced.

The modifier having a functional group containing a nitrogen atom and an alkoxy group is a generic term for modifiers having at least one functional group containing a nitrogen atom and at least one alkoxy group.

The functional group containing a nitrogen atom is preferably selected from the following:
monovalent hydrocarbon groups containing 1 to 30 carbon atoms having a functional group selected from the group consisting of a primary amino group, a primary amino group protected with a hydrolyzable protective group, an onium salt residue of a primary amine, an isocyanate group, a thioisocyanate group, an imine group, an imine residue, an amide group, a secondary amino group protected with a hydrolyzable protective group, a cyclic secondary amino group, an onium salt residue of a cyclic secondary amine, a non-cyclic secondary amino group, an onium salt residue of a non-cyclic secondary amine, an isocyanuric acid triester residue, a cyclic tertiary amino group, a non-cyclic tertiary amino group, a nitrile group, a pyridine residue, an onium salt residue of a cyclic tertiary amine, and an onium salt residue of a non-cyclic tertiary amine, and including a straight chain, a branched chain, an alicyclic ring or an aromatic ring; or monovalent hydrocarbon groups containing 1 to 30 carbon atoms including a straight chain, a branched chain, an alicyclic ring that may include at least one heteroatom selected from an oxygen atom, sulfur atom, and phosphorus atom.

-- Modified Styrene-Butadiene Rubber of First Preferred Embodiment --

The styrene-butadiene rubber (SBR) is preferably modified with an aminoalkoxysilane compound, and from the perspective of having high affinity with the filler, the styrene-butadiene rubber is more preferably modified at a terminal end with an aminoalkoxysilane compound. When the styrene-butadiene rubber is modified with an aminoalkoxysilane compound at a terminal end, the interaction between the modified styrene-butadiene rubber and the filler (particularly silica) becomes particularly strong.

The modification site of the styrene-butadiene rubber may be a molecular terminal as described above, or may be the main chain.

A styrene-butadiene rubber with modified molecular terminals can be produced, for example, by reacting various modifying agents with a terminal of a styrene-butadiene copolymer having an active terminal, according to the method disclosed in WO 2003/046020 A1 and JP 2007-217562 A.

In one preferred embodiment, the styrene-butadiene rubber with a modified molecular terminal can be produced by first reacting an aminoalkoxysilane compound with a terminal of a styrene-butadiene copolymer having an active terminal with a cis-1,4 bond content of 75% or more, according to the method disclosed in WO 2003/046020 A1 or JP 2007-217562 A, and then stabilizing the resulting compound by reacting it with a carboxylic acid partial ester of a polyhydric alcohol.

The carboxylic acid partial ester of a polyhydric alcohol refers to an ester of a polyhydric alcohol and a carboxylic acid, which has at least one hydroxyl group. Specifically, esters of saccharides or modified saccharides having four or more carbon atoms and fatty acids are preferably used. More preferably, these esters include: (1) fatty acid partial esters of polyhydric alcohols, particularly partial esters (monoesters, diesters, or triesters) of saturated or unsaturated higher fatty acids having 10 to 20 carbon atoms and polyhydric alcohols, and (2) ester compounds in which one to three partial esters of polycarboxylic acids and higher alcohols are bonded to a polyhydric alcohol.

As the polyhydric alcohols used as raw materials for partial esters, (hydrogenated or non-hydrogenated) saccharides with five or six carbon atoms having at least three hydroxyl groups, glycols, and polyhydroxy compounds are preferably used. As the raw material fatty acids, saturated or unsaturated fatty acids having 10 to 20 carbon atoms are preferred, and stearic acid, lauric acid, or palmitic acid is used, for example.

Among the fatty acid partial esters of polyhydric alcohols, sorbitan fatty acid esters are preferred, and specific examples thereof include sorbitan monolaurate, sorbitan monopalmitate, sorbitan monostearate, sorbitan tristearate, sorbitan monooleate, and sorbitan trioleate.

The aminoalkoxysilane compound mentioned above is not particularly limited, but an aminoalkoxysilane compound represented by the following general formula (i) is preferred.

$$R^{11}_a\text{-Si-}(OR^{12})_{4-a} \cdots \qquad (i)$$

In the general formula (i), $R^{11}$ and $R^{12}$ each independently represent a monovalent aliphatic hydrocarbon group having 1 to 20 carbon atoms or a monovalent aromatic hydrocarbon group having 6 to 18 carbon atoms, at least one of $R^{11}$ and $R^{12}$ is substituted with an amino group, and "a" represents an integer from 0 to 2; when multiple $OR^{12}$ are present, each $OR^{12}$ may be the same or different; and the molecule does not include active protons.

As the aminoalkoxysilane compound, an aminoalkoxysilane compound represented by the following general formula (ii) is also preferred.

[Chem. 1]

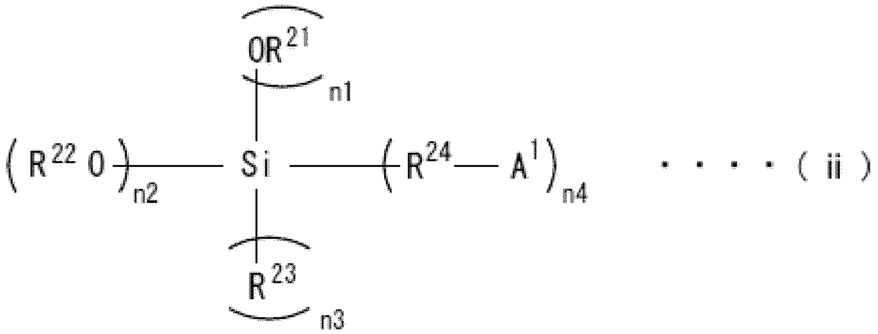

In the general formula (ii), n1 + n2 + n3 + n4 = 4, where n2 is an integer from 1 to 4, and n1, n3, and n4 are integers from 0 to 3.

$A^1$ is at least one functional group selected from the group consisting of a saturated cyclic tertiary amine compound residue, an unsaturated cyclic tertiary amine compound residue, a ketimine residue, a nitrile group, a (thio)isocyanate group, an isocyanuric acid trihydrocarbyl ester group, a nitrile group, a pyridine group, a (thio)ketone group, an amide group, and a primary or secondary amino group having a hydrolyzable group. When n4 is 2 or more, $A^1$ may be the same or different, and $A^1$ may be a divalent group that forms a cyclic structure by binding to Si.

$R^{21}$ is a monovalent aliphatic or alicyclic hydrocarbon group having 1 to 20 carbon atoms or a monovalent aromatic hydrocarbon group having 6 to 18 carbon atoms, and when n1 is 2 or more, they may be the same or different.

$R^{22}$ is a monovalent aliphatic or alicyclic hydrocarbon group having 1 to 20 carbon atoms or a monovalent aromatic hydrocarbon group having 6 to 18 carbon atoms, any of which may contain a nitrogen atom and/or a silicon atom. When n2 is 2 or more, $R^{22}$ may be the same or different from each other, or they may be joined together to form a ring.

$R^{23}$ is a monovalent aliphatic or alicyclic hydrocarbon group having 1 to 20 carbon atoms, a monovalent aromatic hydrocarbon group having 6 to 18 carbon atoms, or a halogen atom, and when n3 is 2 or more, $R^{23}$ may be the same or different.

$R^{24}$ is a divalent aliphatic or alicyclic hydrocarbon group having 1 to 20 carbon atoms or a divalent aromatic hydrocarbon group having 6 to 18 carbon atoms, and when n4 is 2 or more, $R^{24}$ may be the same or different.

The hydrolyzable group in the primary or secondary amino group having the hydrolyzable group is preferably a trimethylsilyl group or a tert-butyldimethylsilyl group, with the trimethylsilyl group being particularly preferred.

The aminoalkoxysilane compound represented by the above general formula (ii) is preferably an aminoalkoxysilane compound represented by the following general formula (iii).

[Chem. 2]

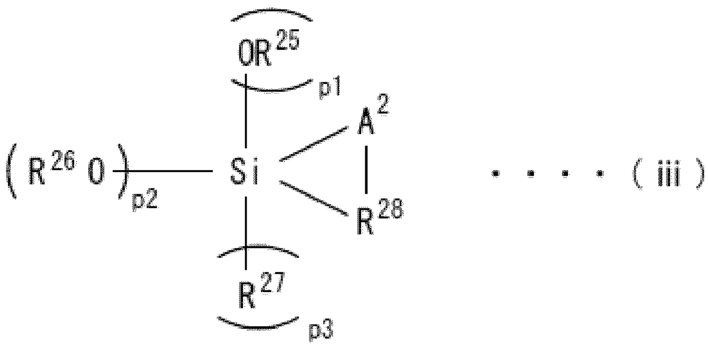

In the general formula (iii), p1 + p2 + p3 = 2, where p2 is an integer from 1 to 2, and p1 and p3 are integers from 0 to 1.

$A^2$ is NRa, where Ra is a monovalent hydrocarbon group, a hydrolyzable group, or a nitrogen-containing organic group.

$R^{25}$ is a monovalent aliphatic or alicyclic hydrocarbon group having 1 to 20 carbon atoms or a monovalent aromatic hydrocarbon group having 6 to 18 carbon atoms.

$R^{26}$ is a monovalent aliphatic or alicyclic hydrocarbon group having 1 to 20 carbon atoms, a monovalent aromatic hydrocarbon group having 6 to 18 carbon atoms, or a nitrogen-containing organic group, any of which may contain a nitrogen atom and/or a silicon atom. When p2 is 2, $R^{26}$ may be the same or different from each other, or they may be joined together to form a ring.

$R^{27}$ is a monovalent aliphatic or alicyclic hydrocarbon group having 1 to 20 carbon atoms, a monovalent aromatic hydrocarbon group having 6 to 18 carbon atoms, or a halogen atom.

$R^{28}$ is a divalent aliphatic or alicyclic hydrocarbon group having 1 to 20 carbon atoms or a divalent aromatic hydrocarbon group having 6 to 18 carbon atoms.

A trimethylsilyl group or tert-butyldimethylsilyl group is preferable as the hydrolyzable group, and a trimethylsilyl group is particularly preferable.

The aminoalkoxysilane compound represented by the above general formula (ii) is also preferably an aminoalkoxysilane compound represented by the following general formula (iv) or the following general formula (v).

[Chem. 3]

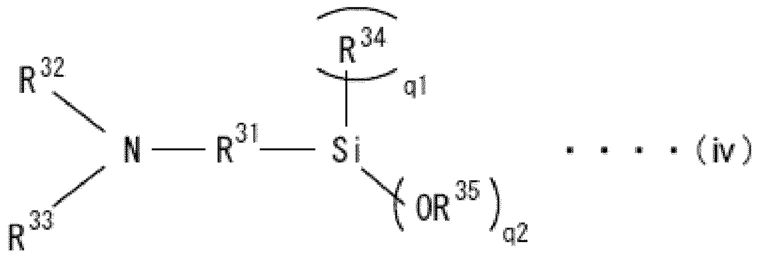

In the general formula (iv), q1 + q2 = 3, where q1 is an integer from 0 to 2, and q2 is an integer from 1 to 3.

$R^{31}$ is a divalent aliphatic or alicyclic hydrocarbon group having 1 to 20 carbon atoms or a divalent aromatic hydrocarbon group having 6 to 18 carbon atoms.

$R^{32}$ and $R^{33}$ are each independently a hydrolyzable group, a monovalent aliphatic or alicyclic hydrocarbon group having 1 to 20 carbon atoms, or a monovalent aromatic hydrocarbon group having 6 to 18 carbon atoms.

$R^{34}$ is a monovalent aliphatic or alicyclic hydrocarbon group having 1 to 20 carbon atoms or a monovalent aromatic hydrocarbon group having 6 to 18 carbon atoms, and when q1 is 2, $R^{34}$ may be the same or different.

$R^{35}$ is a monovalent aliphatic or alicyclic hydrocarbon group having 1 to 20 carbon atoms or a monovalent aromatic hydrocarbon group having 6 to 18 carbon atoms, and when q2 is 2 or more, $R^{35}$ may be the same or different.

[Chem. 4]

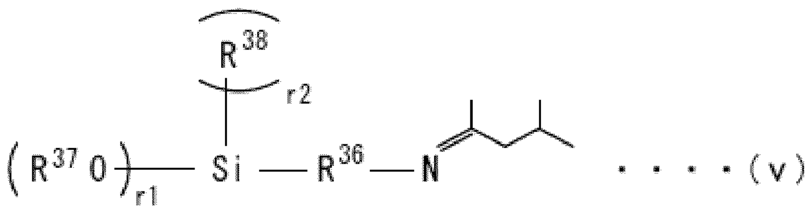

In the general formula (v), r1 + r2 = 3, where r1 is an integer from 1 to 3, and r2 is an integer from 0 to 2.

$R^{36}$ is a divalent aliphatic or alicyclic hydrocarbon group having 1 to 20 carbon atoms or a divalent aromatic hydrocarbon group having 6 to 18 carbon atoms.

$R^{37}$ is a dimethylaminomethyl group, a dimethylaminoethyl group, a diethylaminomethyl group, a diethylaminoethyl group, a methylsilyl (methyl) aminomethyl group, a methylsilyl (methyl) aminoethyl group, a methylsilyl (ethyl) aminomethyl group, a methylsilyl (ethyl) aminoethyl group, a dimethylsilyl aminomethyl group, a dimethylsilyl aminoethyl group, a monovalent aliphatic or alicyclic hydrocarbon group having 1 to 20 carbon atoms, or a monovalent aromatic hydrocarbon group having 6 to 18 carbon atoms, and when r1 is 2 or more, $R^{37}$ may be the same or different.

$R^{38}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, $R^{38}$ may be the same or different.

A specific example of the aminoalkoxysilane compound represented by general formula (v) includes N-(1,3-dimethylbutylidene)-3-triethoxysilyl-1-propanamine.

The aminoalkoxysilane compound represented by the above general formula (ii) is also preferably an aminoalkoxysilane compound represented by the following general formula (vi) or the following general formula (vii).

[Chem. 5]

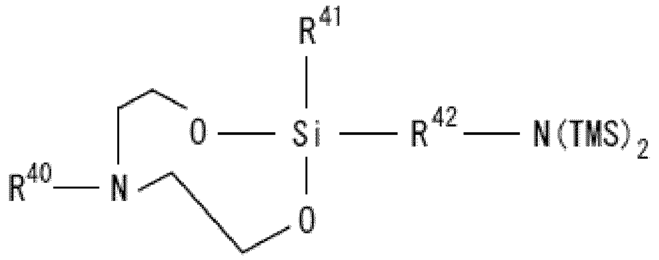

· · · · · (vi)

In the general formula (vi), $R^{40}$ is a trimethylsilyl group, a monovalent aliphatic or alicyclic hydrocarbon group having 1 to 20 carbon atoms, or a monovalent aromatic hydrocarbon group having 6 to 18 carbon atoms.

$R^{41}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

$R^{42}$ is a divalent aliphatic or alicyclic hydrocarbon group having 1 to 20 carbon atoms or a divalent aromatic hydrocarbon group having 6 to 18 carbon atoms.

Here, TMS indicates a trimethylsilyl group (the same holds below).

[Chem. 6]

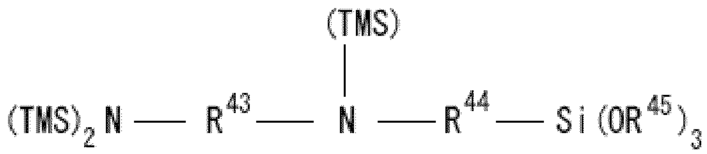

· · · · · (vii)

In the general formula (vii), $R^{43}$ and $R^{44}$ are each independently a divalent aliphatic or alicyclic hydrocarbon group having 1 to 20 carbon atoms or a divalent aromatic hydrocarbon group having 6 to 18 carbon atoms.

$R^{45}$ is a monovalent aliphatic or alicyclic hydrocarbon group having 1 to 20 carbon atoms or a monovalent aromatic hydrocarbon group having 6 to 18 carbon atoms, and each $R^{45}$ may be the same or different.

The aminoalkoxysilane compound represented by the above general formula (ii) is also preferably an aminoalkoxysilane compound represented by the following general formula (viii) or the following general formula (ix).

[Chem. 7]

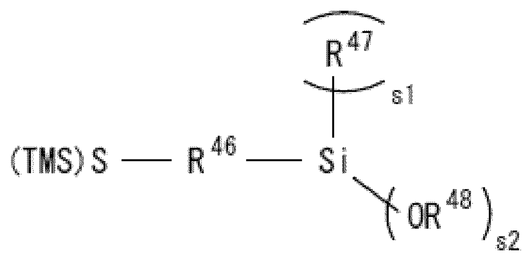

· · · · · (viii)

In the general formula (viii), s1 + s2 = 3, where s1 is an integer from 0 to 2, and s2 is an integer from 1 to 3.

$R^{46}$ is a divalent aliphatic or alicyclic hydrocarbon group having 1 to 20 carbon atoms or a divalent aromatic hydrocarbon group having 6 to 18 carbon atoms.

$R^{47}$ and $R^{48}$ are each independently a monovalent aliphatic or alicyclic hydrocarbon group having 1 to 20 carbon atoms or a monovalent aromatic hydrocarbon group having 6 to 18 carbon atoms. If multiple $R^{47}$ or $R^{48}$ are each present, they may be the same or different.

[Chem. 8]

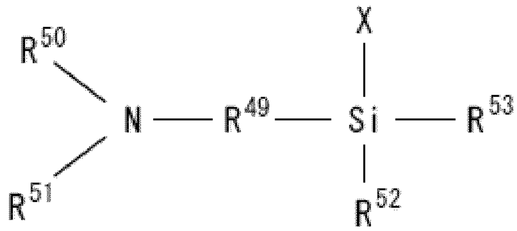

(ix)

In the general formula (ix), X is a halogen atom.

$R^{49}$ is a divalent aliphatic or alicyclic hydrocarbon group having 1 to 20 carbon atoms or a divalent aromatic hydrocarbon group having 6 to 18 carbon atoms.

$R^{50}$ and $R^{51}$ are each independently a hydrolyzable group, a monovalent aliphatic or alicyclic hydrocarbon group having 1 to 20 carbon atoms, or a monovalent aromatic hydrocarbon group having 6 to 18 carbon atoms, or $R^{50}$ and $R^{51}$ are bonded together to form a divalent organic group.

$R^{52}$ and $R^{53}$ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

A hydrolyzable group is preferable as $R^{50}$ and $R^{51}$, and a trimethylsilyl group or tert-butyldimethylsilyl group is preferable as the hydrolyzable group, with a trimethylsilyl group being particularly preferable.

The aminoalkoxysilane compound represented by the above general formula (ii) is also preferably an aminoalkoxysilane compound represented by the following general formula (x), the following general formula (xi), the following general formula (xii), or the following general formula (xiii).

[Chem. 9]

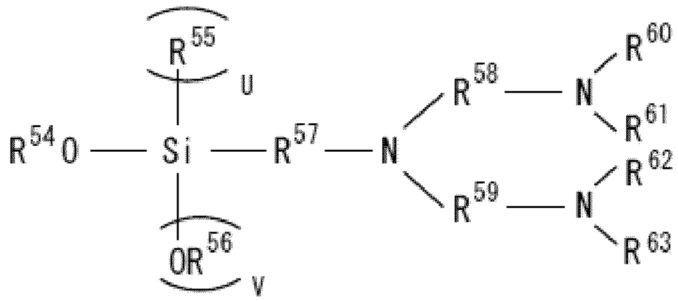

(x)

[Chem. 10]

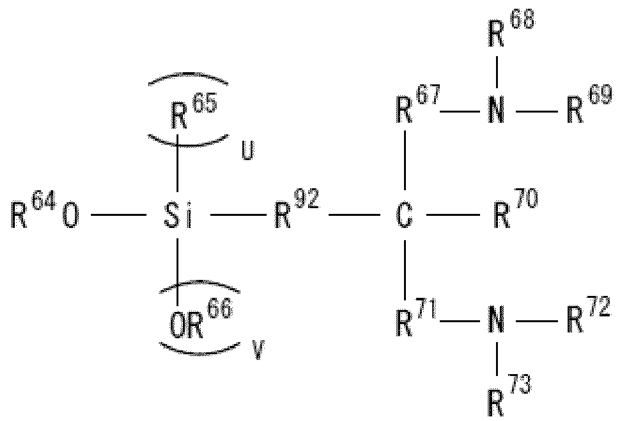

(xi)

[Chem. 11]

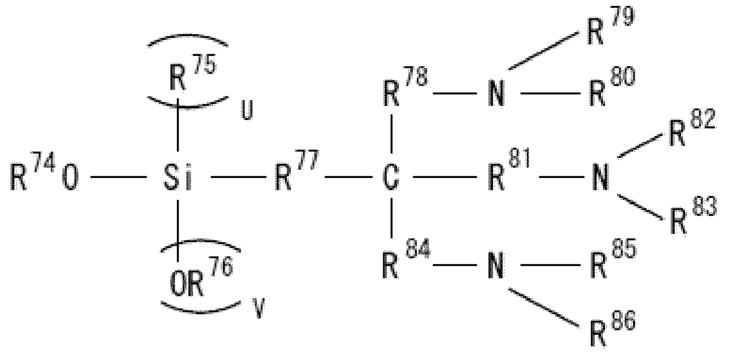

· · · · (xii)

[Chem. 12]

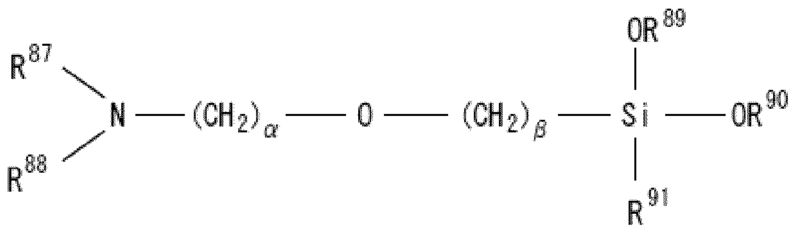

· · · · (xiii)

In the general formulas (x) to (xiii), the symbols U and V each represent integers from 0 to 2 and satisfy the relationship U + V = 2.

$R^{54}$ to $R^{92}$ in the general formulas (x) to (xiii) may be the same or different, and each represents a monovalent or divalent aliphatic or alicyclic hydrocarbon group having 1 to 20 carbon atoms or a monovalent or divalent aromatic hydrocarbon group having 6 to 18 carbon atoms.

In the general formula (xiii), $\alpha$ and $\beta$ represent integers from 0 to 5.

Among the compounds satisfying general formula (x), general formula (xi), and general formula (xii), N1,N1,N7,N7-tetramethyl-4-((trimethoxysilyl)methyl)heptane-1,7-diamine, 2-((hexyl-dimethoxysilyl) methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are particularly preferred.

Furthermore, among the compounds satisfying general formula (xiii), N,N-dimethyl-2-(3-(dimethoxymethylsilyl) propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propan-1-amine are particularly preferred.

-- Modified Styrene-Butadiene Rubber of Second Preferred Embodiment --

The styrene-butadiene rubber (SBR) is also preferably modified with a coupling agent represented by the following general formula (I). In this case, the fuel efficiency and wear resistance of the tire can be further improved.

[Chem. 13]

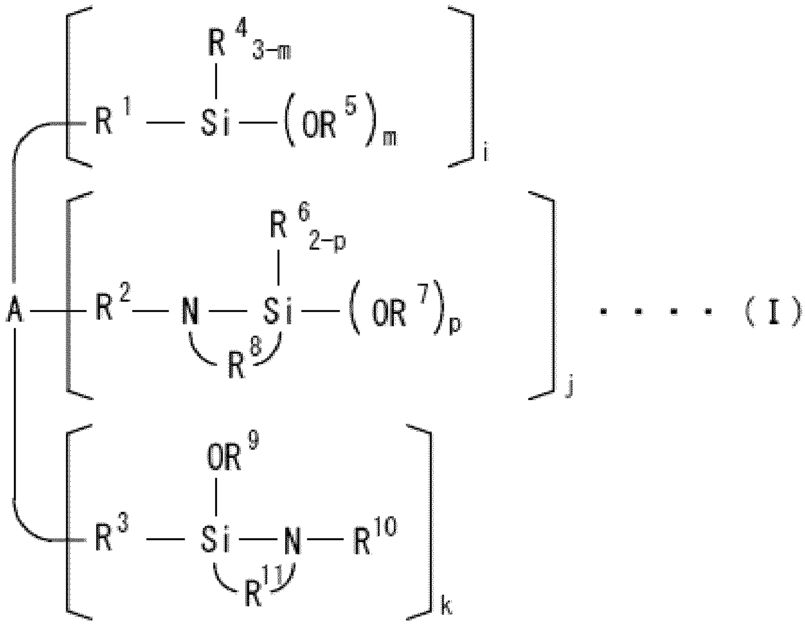

In the above general formula (I), $R^1$, $R^2$, and $R^3$ each independently represent a single bond or an alkylene group having 1 to 20 carbon atoms.

$R^4$, $R^5$, $R^6$, $R^7$, and $R^9$ each independently represent an alkyl group having 1 to 20 carbon atoms.

$R^8$ and $R^{11}$ each independently represent an alkylene group having 1 to 20 carbon atoms.

$R^{10}$ represents an alkyl group or a trialkylsilyl group having 1 to 20 carbon atoms.

m represents an integer from 1 to 3, and p represents 1 or 2.

When multiple $R^1$ to $R^{11}$, m, and p are each present, they are each independently selected.

i, j, and k each independently represent an integer from 0 to 6, provided that (i + j + k) is an integer from 3 to 10.

"A" represents a hydrocarbon group having 1 to 20 carbon atoms or an organic group having 1 to 20 carbon atoms that includes at least one atom selected from the group consisting of an oxygen atom, a nitrogen atom, a silicon atom, a sulfur atom, and a phosphorus atom, and does not contain active hydrogen.

In the general formula (I), the hydrocarbon group represented by "A" includes saturated, unsaturated, aliphatic, and aromatic hydrocarbon groups. Examples of organic groups that do not contain active hydrogen include organic groups that do not have functional groups with active hydrogen, such as hydroxyl groups (-OH), secondary amino groups (>NH), primary amino groups ($-NH_2$), and sulfhydryl groups (-SH), for example.

The styrene-butadiene rubber modified with a coupling agent represented by the above general formula (I) preferably has a weight-average molecular weight (Mw) of $20 \times 10^4$ to $300 \times 10^4$, contains 0.25 to 30 mass% of modified styrene-butadiene rubber with a molecular weight of $200 \times 10^4$ to $500 \times 10^4$ relative to the total amount of modified styrene-butadiene rubber, and has a contraction factor (g') of less than 0.64.

In general, polymers with branching tend to have a smaller molecular size compared to linear polymers of the same absolute molecular weight, and the contraction factor (g') serves as an index indicating the ratio of the molecular size relative to an assumed linear polymer with the same absolute molecular weight. That is, as the degree of branching of the polymer increases, the contraction factor (g') tends to decrease. In the present embodiment, the intrinsic viscosity is used as an index of molecular size, assuming that linear polymers follow the relationship: the intrinsic viscosity $[\eta] = -3.883\ M^{0.771}$. The contraction factor (g') of a modified styrene-butadiene rubber with each absolute molecular weight is calculated, and the average value of the contraction factors (g') when the absolute molecular weights are $100 \times 10^4$ to $200 \times 10^4$ is defined as the contraction factor (g') of that modified styrene-butadiene rubber. Here, "branching" refers to a structure formed when one polymer is directly or indirectly bonded to another polymer. Additionally, "degree of branching" refers to the number of polymers that are directly or indirectly bonded to a single branch. For example, if five styrene-butadiene copolymer chains described later are indirectly bonded to each other via a coupling residue described later, the degree of branching is 5. The coupling residue refers to a structural unit of the modified styrene-butadiene rubber that is bonded to the styrene-butadiene copolymer chains, and it is a structural unit derived from the coupling agent, which is formed by reacting the styrene-butadiene copolymer and the coupling agent described later, for example. Additionally, the

styrene-butadiene copolymer chain is a structural unit of the modified styrene-butadiene rubber, which is formed as a structural unit derived from the styrene-butadiene copolymer by reacting the styrene-butadiene copolymer and the coupling agent described later, for example.

The contraction factor (g') is preferably less than 0.64, more preferably 0.63 or less, even more preferably 0.60 or less, further preferably 0.59 or less, and even further preferably 0.57 or less. The lower limit of the contraction factor (g') is not particularly limited and may be smaller than or equal to the detection limit, but it is preferably 0.30 or more, more preferably 0.33 or more, further preferably 0.35 or more, and even further preferably 0.45 or more. When a modified styrene-butadiene rubber with a contraction factor (g') within this range is used, the processability of the rubber composition used in the tread rubber layer is improved.

Since the contraction factor (g') tends to depend on the degree of branching, the contraction factor (g') can be controlled using the degree of branching as an index, for example. Specifically, when a modified styrene-butadiene rubber with a branching degree of 6 is used, the contraction factor (g') tends to be 0.59 or more and 0.63 or less, and when a modified styrene-butadiene rubber with a branching degree of 8 is used, the contraction factor (g') tends to be 0.45 or more and 0.59 or less.

It is preferable that the styrene-butadiene rubber modified with a coupling agent represented by the above general formula (I) has branching and has a branching degree of 5 or more. Additionally, it is more preferable that the modified styrene-butadiene rubber has one or more coupling residues and a styrene-butadiene copolymer chain bonded to the coupling residues, and the branching includes a structure in which five or more styrene-butadiene copolymer chains are bonded to a single coupling residue. By specifying the structure of the modified styrene-butadiene rubber such that the branching degree is 5 or more and the branching includes a structure in which five or more styrene-butadiene copolymer chains are bonded to a single coupling residue, the contraction factor (g') can be more reliably controlled to be less than 0.64. The number of styrene-butadiene copolymer chains bonded to a single coupling residue can be confirmed from the value of the contraction factor (g').

It is more preferable that the modified styrene-butadiene rubber preferably has branching and has a branching degree of 6 or more. Additionally, it is even more preferable that the modified styrene-butadiene rubber has one or more coupling residues and a styrene-butadiene copolymer chain bonded to the coupling residues, and the branching includes a structure in which six or more styrene-butadiene copolymer chains are bonded to a single coupling residue. By specifying the structure of the modified styrene-butadiene rubber such that the branching degree is 6 or more and the branching includes a structure in which six or more styrene-butadiene copolymer chains are bonded to a single coupling residue, the contraction factor (g') can be controlled to be 0.63 or less.

Furthermore, the modified styrene-butadiene rubber further preferably has branching and has a branching degree of 7 or more, and even further preferably has a branching degree of 8 or more. The upper limit of the branching degree is not particularly limited but is preferably 18 or less. Additionally, it is further preferable that the modified styrene-butadiene rubber has one or more coupling residues and a styrene-butadiene copolymer chain bonded to the coupling residues and the branching includes a structure in which seven or more styrene-butadiene copolymer chains are bonded to a single coupling residue, and it is particularly preferable that the branching includes a structure in which eight or more styrene-butadiene copolymer chains are bonded to a single coupling residue. By setting the branching degree to 8 or more and specifying the structure of the modified styrene-butadiene rubber such that the branching includes a structure in which eight or more styrene-butadiene copolymer chains are bonded to a single coupling residue, the contraction factor (g') can be controlled to be 0.59 or less.

The styrene-butadiene copolymer chain preferably has at least one of the terminal ends thereof bonded to a silicon atom contained in the coupling residue. In this case, terminal ends of multiple styrene-butadiene copolymer chains may be bonded to a single silicon atom. Additionally, a terminal end of a styrene-butadiene copolymer chain and an alkoxy group having 1 to 20 carbon atoms or a hydroxyl group may be bonded to a single silicon atom, and as a result, the single silicon atom may form an alkoxysilyl group having 1 to 20 carbon atoms or a silanol group.

The modified styrene-butadiene rubber may be an oil-extended rubber to which extending oil has been added. The modified styrene-butadiene rubber may be either non-oil-extended or oil-extended, but from the perspective of wear resistance, the Mooney viscosity measured at 100°C is preferably 20 or more and 100 or less, more preferably 30 or more and 80 or less.

The weight-average molecular weight (Mw) of the modified styrene-butadiene rubber is preferably $20 \times 10^4$ or more and $300 \times 10^4$ or less, more preferably $50 \times 10^4$ or more, more preferably $64 \times 10^4$ or more, and even more preferably $80 \times 10^4$ or more. Additionally, the weight-average molecular weight is preferably $250 \times 10^4$ or less, more preferably $180 \times 10^4$ or less, and even more preferably $150 \times 10^4$ or less. When the weight-average molecular weight is $20 \times 10^4$ or more, the low loss property and wear resistance of the tread rubber layer can be sufficiently improved. Furthermore, when the weight-average molecular weight is $300 \times 10^4$ or less, the processability of the rubber composition used in the tread rubber layer is improved.

The modified styrene-butadiene rubber preferably contains a modified styrene-butadiene rubber having a molecular weight of $200 \times 10^4$ or more and $500 \times 10^4$ or less (hereinafter, referred to as "specific high molecular weight

component"), in an amount of 0.25 mass% or more and 30 mass% or less relative to the total amount (100 mass%) of the modified styrene-butadiene rubber. When the content of the specific high molecular weight component is 0.25 mass% or more and 30 mass% or less, it is possible to sufficiently improve both the low-loss property and wear resistance of the tread rubber layer. The modified styrene-butadiene rubber contains the above-described specific high molecular weight component in an amount of preferably 1.0 mass% or more, more preferably 1.4 mass% or more, even more preferably 1.75 mass% or more, still even more preferably 2.0 mass% or more, particularly preferably 2.15 mass% or more, and especially preferably 2.5 mass% or more. Additionally, the modified styrene-butadiene rubber contains the specific high molecular weight component in an amount of preferably 28 mass% or less, more preferably 25 mass% or less, even more preferably 20 mass% or less, and still even more preferably 18 mass% or less.

In this specification, the "molecular weight" of the rubber component refers to the polystyrene-equivalent molecular weight obtained by gel permeation chromatography (GPC). To obtain a modified styrene-butadiene rubber in which the content of the specific high molecular weight component is within this range, it is preferable to control the reaction conditions in both the polymerization step and the reaction step described later. For example, in the polymerization step, the amount of the organolithium compound used as a polymerization initiator, which will be described later, may be adjusted. Additionally, in the polymerization step, a method with a residence time distribution may be used in either a continuous or batch polymerization mode. In other words, the time distribution of the growth reaction may be broadened.

**In** the modified styrene-butadiene rubber, the molecular weight distribution (Mw/Mn), which is expressed as the ratio of weight-average molecular weight (Mw) to number-average molecular weight (Mn), is preferably 1.6 or more and 3.0 or less. When the molecular weight distribution of the modified styrene-butadiene rubber is within this range, the processability of the rubber composition used for the tread rubber layer is improved.

The production method of the modified styrene-butadiene rubber is not particularly limited, but the production method preferably include a polymerization step, in which butadiene and styrene are copolymerized using an organolithium compound as a polymerization initiator to obtain a styrene-butadiene copolymer, and a reaction step, in which a reactive compound having five or more functional groups (hereinafter referred to as "coupling agent") is reacted with an active terminal of the styrene-butadiene copolymer.

The polymerization step is preferably conducted by living anionic polymerization, which enables the production of a styrene-butadiene copolymer with an active terminal, thereby allowing for the synthesis of a modified styrene-butadiene rubber with a high modification rate.

The styrene-butadiene copolymer is obtained by copolymerizing 1,3-butadiene and styrene.

The amount of the organolithium compound used as a polymerization initiator is preferably determined based on the target molecular weight of the styrene-butadiene copolymer or modified styrene-butadiene rubber. The amount of monomers such as 1,3-butadiene and styrene used relative to the amount of the polymerization initiator is related to the degree of polymerization, that is, it affects the number-average molecular weight and/or weight-average molecular weight. Therefore, to increase the molecular weight, the amount of the polymerization initiator may be reduced, and to decrease the molecular weight, the amount of polymerization initiator may be increased.

From the perspective of industrial availability and ease of control on the polymerization reaction, the organolithium compound is preferably an alkyllithium compound. In this case, a styrene-butadiene copolymer having an alkyl group at the polymerization initiation terminal is obtained. Examples of the alkyllithium compound include n-butyllithium, sec-butyllithium, tert-butyllithium, n-hexyllithium, benzyllithium, phenyllithium, and stilbene lithium, for example. From the perspective of industrial availability and ease of control on the polymerization reaction, n-butyllithium and sec-butyllithium are preferred as the alkyllithium compound. These alkyllithium compounds may be used alone or in combination with one or more thereof.

In the polymerization step, examples of the polymerization reaction mode include batch polymerization and continuous polymerization, for example. In the continuous polymerization, one reactor or two or more reactors connected to each other can be used. Examples of continuous reactors include tank reactors and tubular reactors equipped with a stirrer, for example. In the continuous polymerization, it is preferable that monomers, an inert solvent, and a polymerization initiator are continuously fed into the reactor, and a polymer solution containing the polymer is obtained in the reactor, from which the polymer solution is continuously discharged. In the batch polymerization, a tank reactor equipped with a stirrer is used, for example. In the batch polymerization, it is preferable that monomers, an inert solvent, and a polymerization initiator are fed, and, if necessary, monomers are continuously or intermittently added during polymerization, a polymer solution containing the polymer is obtained in the reactor, and the polymer solution is discharged after polymerization is completed. To obtain a styrene-butadiene copolymer with a high proportion of active terminals in the present embodiment, the continuous polymerization process is preferred because it allows the polymer to be continuously discharged and used for the next reaction in a short time.

The polymerization step is preferably conducted in an inert solvent. Examples of the solvent include hydrocarbon-based solvents such as saturated hydrocarbons and aromatic hydrocarbons. Specific examples of hydrocarbon-based solvents include, but are not limited to, aliphatic hydrocarbons such as butane, pentane, hexane, and heptane; alicyclic hydrocarbons such as cyclopentane, cyclohexane, methylcyclopentane, and methylcyclohexane; and aromatic

hydrocarbons such as benzene, toluene, and xylene, as well as mixtures thereof. Before being subjected to the polymerization reaction, treating impurities such as allenes and acetylenes with an organometallic compound is preferable because a styrene-butadiene copolymer with a high concentration of active terminals tends to be obtained, which in turn tends to yield a modified styrene-butadiene rubber with a high modification rate.

In the polymerization step, a polar compound may be added. By adding a polar compound, styrene can be randomly copolymerized with 1,3-butadiene, and the polar compound also tends to function as a vinylating agent to control the microstructure of the 1,3-butadiene segments.

Examples of the polar compound include ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium tert-amylate, potassium tert-butyrate, sodium tert-butyrate, and sodium amylate; and phosphine compounds such as triphenylphosphine, for example. These polar compounds may be used alone or in combination with one or more thereof.

In the polymerization step, the polymerization temperature is preferably 0°C or higher, more preferably 120°C or lower, and particularly preferably 50°C or higher and 100°C or lower, from the perspective of productivity. Using the polymerization temperature within this range tends to ensure a sufficient reaction amount of the coupling agent with the active terminals after polymerization.

The bound butadiene content in the styrene-butadiene copolymer or modified styrene-butadiene rubber is not particularly limited but is preferably 40 mass% or more and 100 mass% or less, more preferably 55 mass% or more and 80 mass% or less.

Additionally, the bound styrene content in the styrene-butadiene copolymer or modified styrene-butadiene rubber is not particularly limited but is preferably more than 0 mass% and 60 mass% or less, more preferably 20 mass% or more and 45 mass% or less.

When the bound butadiene content and bound styrene content are within these ranges, the low loss property and wear resistance of the tread rubber layer can be further improved.

The bound styrene content can be measured by UV absorption of the phenyl group, and the bound butadiene content can be determined from the measurement result.

In the styrene-butadiene copolymer or modified styrene-butadiene rubber, the vinyl bond content in the bound butadiene units is not particularly limited but is preferably 10 mol% or more and 75 mol% or less, more preferably 20 mol% or more and 65 mol% or less. When the vinyl bond content is within this range, the low loss property and wear resistance of the tread rubber layer can be further improved.

In the case of the modified styrene-butadiene rubber, the vinyl bond content (1,2-bond content) in the bound butadiene units can be determined by the Hampton's method (R. R. Hampton, Analytical Chemistry, 21, 923 (1949)).

The alkoxysilyl group in the coupling agent represented by the above general formula (I) reacts with the active terminal of the styrene-butadiene copolymer, for example, causing the alkoxylithium to dissociate, and a bond between the terminal of the styrene-butadiene copolymer chain and the silicon of the coupling residue tends to be formed. The number of alkoxysilyl groups in the coupling residue is obtained by subtracting the number of SiOR groups reduced by the reaction, from the total number of SiOR groups in one molecule of the coupling agent. Additionally, the azasilacycle group in the coupling agent forms both an >N-Li bond and a bond between the terminal of the styrene-butadiene copolymer and the silicon in the coupling residue. The >N-Li bond tends to be easily converted into >NH and LiOH due to water or other substances during finishing. Moreover, the unreacted alkoxysilyl groups remaining in the coupling agent tend to be easily converted into silanol (Si-OH group) due to water or other substances during finishing.

The reaction temperature in the reaction step is preferably similar to the polymerization temperature of the styrene-butadiene copolymer, more preferably 0°C or higher and 120°C or lower, and even more preferably 50°C or higher and 100°C or lower. The temperature change from the end of the polymerization step to the addition of the coupling agent is preferably 10°C or less, more preferably 5°C or less.

The reaction time in the reaction step is preferably 10 seconds or more, more preferably 30 seconds or more. The time from the completion of the polymerization step to the start of the reaction step is preferably as short as possible in view of coupling efficiency, and more preferably within 5 minutes.

The mixing in the reaction step may be performed by mechanical stirring or using a static mixer. When the polymerization step is continuous, the reaction step is also preferably continuous. Examples of reactors used in the reaction step include tank reactors and tubular reactors equipped with a stirrer, for example. The coupling agent may be diluted with an inert solvent and continuously fed to the reactor. When the polymerization step is batch, the coupling agent can be added directly to the polymerization reactor, or the polymer can be transferred to a separate reactor for the reaction step.

In the general formula (I), A is preferably represented by any one of the following general formulas (II) to (V). When A is represented by any one of general formulas (II) to (V), a modified styrene-butadiene rubber with more excellent performance can be obtained.

[Chem. 14]

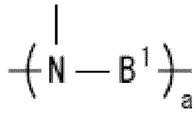 .... (II)

In the general formula (II), $B^1$ represents a single bond or a hydrocarbon group having 1 to 20 carbon atoms, and "a" represents an integer from 1 to 10. When multiple $B^1$ are present, they are each independently selected.

[Chem. 15]

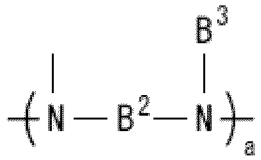 .... (III)

In the general formula (III), $B^2$ represents a single bond or a hydrocarbon group having 1 to 20 carbon atoms, $B^3$ represents an alkyl group having 1 to 20 carbon atoms, and "a" represents an integer from 1 to 10. When multiple $B^2$ and $B^3$ are each present, they are each independently selected.

[Chem. 16]

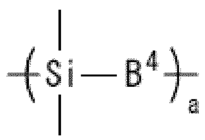 .... (IV)

In the general formula (IV), $B^4$ represents a single bond or a hydrocarbon group having 1 to 20 carbon atoms, and "a" represents an integer from 1 to 10. When multiple $B^4$ are present, they are each independently selected.

[Chem. 17]

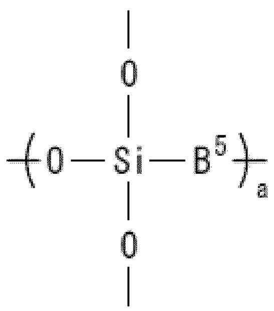 .... (V)

In the general formula (V), $B^5$ represents a single bond or a hydrocarbon group having 1 to 20 carbon atoms, and "a" represents an integer from 1 to 10. When multiple $B^5$ are present, they are each independently selected.

For $B^1$, $B^2$, $B^4$, and $B^5$ in the general formulas (II) to (V), examples of hydrocarbon groups having 1 to 20 carbon atoms include alkylene groups having 1 to 20 carbon atoms.

Preferably, in the general formula (I), A is represented by the general formula (II) or (III) and k represents 0.

More preferably, in the general formula (I), A is represented by the general formula (II) or (III) and k represents 0, and "a" represents an integer from 2 to 10 in the general formula (II) or (III).

Even more preferably, in the general formula (I), A is represented by the general formula (II) and k represents 0, and "a" represents an integer from 2 to 10 in the general formula (II).

Examples of such coupling agents include bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trimethoxysilylpropyl)-methyl-1,3-propanediamine, for example. Of these, tetrakis(3-trimethoxysilylpropyl)-1,3-propanediamine and tetrakis(3-trimethoxysilylpropyl)-1,3-bisaminomethylcyclohexane are particularly preferred.

The addition amount of the compound represented by general formula (I) as the coupling agent can be adjusted so that the styrene-butadiene copolymer and the coupling agent react at the desired stoichiometric molar ratio, which tends to achieve the desired degree of branching. The specific number of moles of the polymerization initiator relative to the number of moles of the coupling agent is preferably 5.0 times or more, more preferably 6.0 times or more. In this case, in the general formula (I), the number of functional groups in the coupling agent ($(m-1)\times i + p\times j + k$) is preferably an integer from 5 to 10, more preferably an integer from 6 to 10.

To obtain a modified styrene-butadiene rubber containing the specific high-molecular-weight component, the molecular weight distribution (Mw/Mn) of the styrene-butadiene copolymer is preferably 1.5 or more and 2.5 or less, more preferably 1.8 or more and 2.2 or less. Additionally, the molecular weight curve of the obtained modified styrene-butadiene rubber by GPC preferably has a single detected peak.

When the peak molecular weight of the modified styrene-butadiene rubber measured by GPC is defined as $Mp_1$ and the peak molecular weight of the styrene-butadiene copolymer is defined as $Mp_2$, it is preferable that the following formula holds:

$$(Mp_1/Mp_2) < 1.8 \times 10 - 12 \times (Mp_2 - 120 \times 10^4)^2 + 2.$$

$Mp_2$ is preferably $20 \times 10^4$ or more and $80 \times 10^4$ or less, and $Mp_1$ is more preferably $30 \times 10^4$ or more and $150 \times 10^4$ or less. $Mp_1$ and $Mp_2$ are determined using the method described in the examples below.

The modification rate of the modified styrene-butadiene rubber is preferably 30 mass% or more, more preferably 50 mass% or more, and even more preferably 70 mass% or more. When the modification rate is 30 mass% or more, the low-loss property and wear resistance of the tread rubber layer can be further improved.

After the reaction step, a deactivator, a neutralizer, etc., may be added to the copolymer solution as necessary. Examples of deactivators include, but are not limited to, water and alcohols such as methanol, ethanol, and isopropanol, for example. Examples of neutralizers include, but are not limited to, carboxylic acids such as stearic acid, oleic acid, and versatic acid (a mixture of highly branched carboxylic acids with 9 to 11 carbon atoms, averaging 10 carbon atoms); aqueous solutions of inorganic acids; and carbon dioxide gas, for example.

Additionally, from the perspective of preventing gel formation after polymerization and the perspective of improving stability during processing, it is preferable to add an antioxidant such as 2,6-di-tert-butyl-4-hydroxytoluene (BHT), n-octadecyl-3-(4'-hydroxy-3',5'-di-tertbutylphenol)propionate, or 2-methyl-4,6-bis[(octylthio)methyl]phenol, for example.

A known method can be used to recover the modified styrene-butadiene rubber from the polymer solution. Examples of the method for obtaining the polymer include, for example, a method in which, after separating the solvent by steam stripping or similar means, the polymer can be filtered, then further dehydrated and dried to obtain the polymer, a method in which the solution is concentrated in a flashing tank and then devolatilized using a vent extruder or similar apparatus, and a method in which the solution is directly devolatilized using a drum dryer or similar apparatus.

The modified styrene-butadiene rubber, obtained by reacting the coupling agent represented by the above general formula (I) with the styrene-butadiene copolymer, for example, is represented by the following general formula (VI).

[Chem. 18]

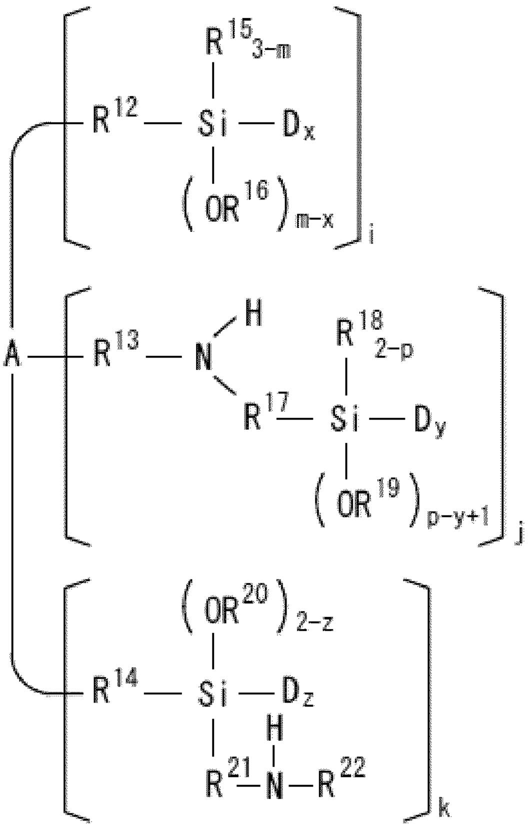

· · · · (VI)

In the general formula (VI), D represents a styrene-butadiene copolymer chain, and the weight-average molecular weight of the styrene-butadiene copolymer chain is preferably $10 \times 10^4$ to $100 \times 10^4$. The styrene-butadiene copolymer chain is the constituting unit of the modified styrene-butadiene rubber and is a structural unit derived from the styrene-butadiene copolymer, formed, for example, by reacting the styrene-butadiene copolymer with the coupling agent.
$R^{12}$, $R^{13}$, and $R^{14}$ each independently represent a single bond or an alkylene group having 1 to 20 carbon atoms.
$R^{15}$ and $R^{18}$ each independently represent an alkyl group having 1 to 20 carbon atoms.
$R^{16}$, $R^{19}$, and $R^{20}$ each independently represent a hydrogen atom or an alkyl group having 1 to 20 carbon atoms.
$R^{17}$ and $R^{21}$ each independently represent an alkylene group having 1 to 20 carbon atoms.
$R^{22}$ represents a hydrogen atom or an alkyl group having 1 to 20 carbon atoms.
m and x each represent an integer from 1 to 3, with $x \leq m$, p represents 1 or 2, y represents an integer from 1 to 3, with $y \leq (p + 1)$, and z represents an integer of 1 or 2.
When multiple D, $R^{12}$ to $R^{22}$, m, p, x, y, and z are each present, they are each independently selected and may be the same or different.
Additionally, "i" represents an integer from 0 to 6, j represents an integer from 0 to 6, and k represents an integer from 0 to 6, with (i + j + k) being an integer from 3 to 10, and $((x \times i) + (y \times j) + (z \times k))$ being an integer from 5 to 30.
"A" represents a hydrocarbon group having 1 to 20 carbon atoms or an organic group containing at least one atom selected from the group consisting of an oxygen atom, a nitrogen atom, a silicon atom, a sulfur atom, and a phosphorus atom, and does not contain active hydrogen. The hydrocarbon group represented by "A" includes saturated, unsaturated, aliphatic, and aromatic hydrocarbon groups. Examples of organic groups that do not contain active hydrogen include organic groups that do not have functional groups with active hydrogen, such as hydroxyl groups (-OH), secondary amino groups (>NH), primary amino groups ($-NH_2$), and sulfhydryl groups (-SH), for example..
In the above general formula (VI), A is preferably represented by any of the above general formulas (II) to (V). When A is represented by any of the general formulas (II) to (V), the low-loss property and wear resistance of the tread rubber layer can be further improved.

-- Modified Styrene-Butadiene Rubber of Third Preferred Embodiment --

At least one terminal of the styrene-butadiene rubber (SBR) is preferably modified with a modifier including a compound (alkoxysilane) represented by general formula (1).

[Chem. 19]

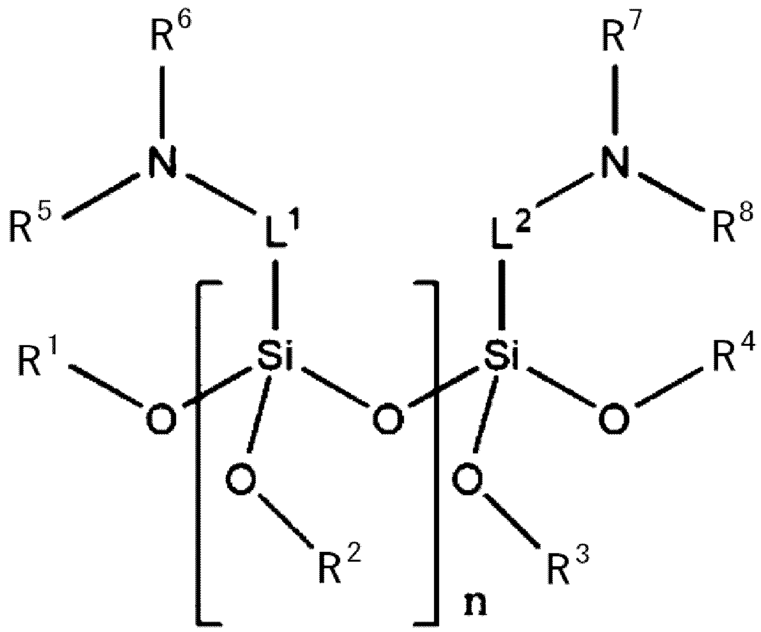

· · · · (1)

By using a styrene-butadiene rubber modified with a modifier containing the compound represented by the above general formula (1), which includes an oligosiloxane group and a tertiary amino group as filler-affinity acting groups, the dispersion of the filler, such as silica, can be enhanced. As a result, the dispersion of the filler in the rubber composition used for the tread rubber layer is improved, thereby significantly enhancing the low-loss property, reducing the rolling resistance of the tire, and improving high fuel efficiency.

In the above general formula (1), $R^1$ to $R^8$ each independently represent an alkyl group having 1 to 20 carbon atoms; $L^1$ and $L^2$ each independently represent an alkylene group having 1 to 20 carbon atoms; and n represents an integer from 2 to 4.

Specifically, in the formula (1), $R^1$ to $R^4$ each independently represent a substituted or unsubstituted alkyl group having 1 to 20 carbon atoms, and when $R^1$ to $R^4$ are substituted, they may each independently be substituted with at least one substituent selected from the group consisting of an alkyl group having 1 to 10 carbon atoms, a cycloalkyl group having 3 to 10 carbon atoms, an alkoxy group having 1 to 10 carbon atoms, a cycloalkoxy group having 4 to 10 carbon atoms, an aryl group having 6 to 12 carbon atoms, an aryloxy group having 6 to 12 carbon atoms, an alkanoyloxy group having 2 to 12 carbon atoms (Ra-COO-, where Ra is an alkyl group having 1 to 9 carbon atoms), an aralkyloxy group having 7 to 13 carbon atoms, an arylalkyl group having 7 to 13 carbon atoms, and an alkylaryl group having 7 to 13 carbon atoms.

More specifically, $R^1$ to $R^4$ may be substituted or unsubstituted alkyl groups having 1 to 10 carbon atoms, and even more specifically, $R^1$ to $R^4$ may each independently be substituted or unsubstituted alkyl groups having 1 to 6 carbon atoms.

Additionally, in the formula (1), $R^5$ to $R^8$ each independently represent a substituted or unsubstituted alkyl group having 1 to 20 carbon atoms, and specifically, they may be substituted or unsubstituted alkyl groups having 1 to 10 carbon atoms, and even more specifically, they may be substituted or unsubstituted alkyl groups having 1 to 6 carbon atoms. When substituted, they may be substituted with the same substituents as described for $R^1$ to $R^4$.

If $R^5$ to $R^8$ are not alkyl groups but hydrolyzable substituents, the bonds of $N\text{-}R^5R^6$ and $N\text{-}R^7R^8$ may undergo hydrolysis in the presence of moisture, converting to N-H, which can negatively impact the processability of the polymer.

More specifically, in the compound represented by the formula (1), $R^1$ to $R^4$ may be methyl groups or ethyl groups, and $R^5$ to $R^8$ may be alkyl groups having 1 to 10 carbon atoms.

The amino groups ($N\text{-}R^5R^6$ and $N\text{-}R^7R^8$) in the compound represented by the formula (1) are preferably tertiary amino groups. The tertiary amino groups impart more excellent processability to the compound represented by formula (1) when it is used as a modifier.

If a protecting group for protecting the amino group or a hydrogen atom is bonded to $R^5$ to $R^8$, the effect of the compound represented by the formula (1) may be prevented from being exhibited. When a hydrogen atom is bonded, the modification process may be hindered because the anion may react with the hydrogen and lose reactivity, making the modification reaction impossible. When a protecting group is bonded, the modification reaction can proceed, but if the protecting group is hydrolyzed and removed to yield an unprotected primary or secondary amino group during post-processing while remaining attached to the polymer chain, the unprotected primary or secondary amino group may increase the viscosity of the formulation during the subsequent compounding, leading to a decrease in processability.

Furthermore, in the compound represented by the formula (1), $L^1$ and $L^2$ each independently represent a substituted or unsubstituted alkylene group having 1 to 20 carbon atoms.

More specifically, $L^1$ and $L^2$ each independently represent an alkylene group having 1 to 10 carbon atoms, and more specifically, they may be alkylene groups having 1 to 6 carbon atoms, such as a methylene group, ethylene group, or propylene group.

Regarding $L^1$ and $L^2$ in the compound represented by the formula (1), the closer the distance between the Si atom and the N atom in the molecule, the more effective the compound becomes. However, if Si is directly bonded to N, the Si-N bond may break during subsequent processing steps. The resulting secondary amino group is likely to be washed away by water during post-processing, making it difficult for the amino group to promote bonding with the filler, such as silica, in the modified styrene-butadiene rubber. As a result, the effect of improving the dispersibility of the filler may be reduced. Considering the improvement effect based on the bond length between Si and N, $L^1$ and $L^2$ are more preferably each independently an alkylene group having 1 to 3 carbon atoms, such as methylene, ethylene, or propylene groups, and more specifically, $L^1$ and $L^2$ may be propylene groups. Furthermore, $L^1$ and $L^2$ may be substituted with the same substituents as described for $R^1$ to $R^4$.

Additionally, the compound represented by the formula (1) is preferably one of the compounds represented by the following structural formulas (1-1) to (1-5), for example. This is because more excellent low-loss property can be achieved.

[Chem. 20]

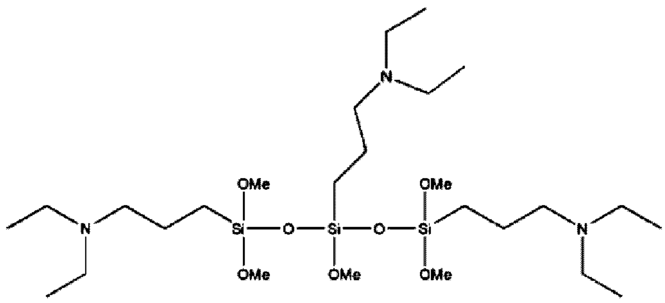

· · · · · (1-1)

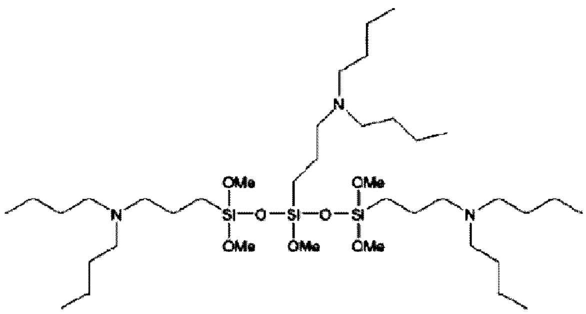

· · · · · (1-2)

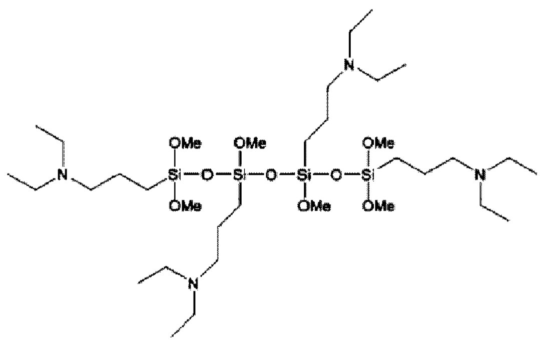

· · · · · (1-3)

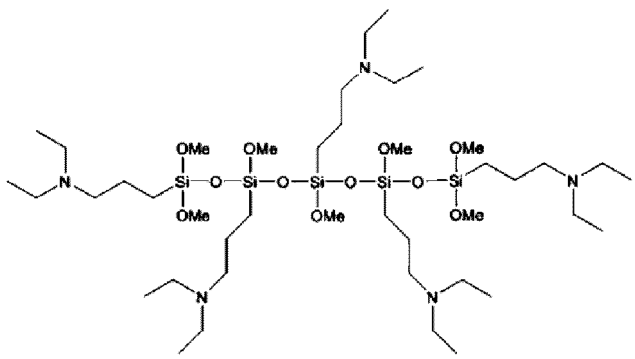

· · · · · (1-4)

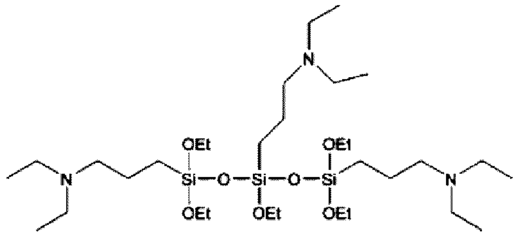

· · · · · (1-5)

In the compound represented by the formula (1), the alkoxysilane structure binds to the active terminal of the styrene-butadiene copolymer, while the Si-O-Si structure and three or more amino groups attached to the terminal exhibit an affinity for the filler, such as silica. This enhances the bonding between the filler and the modified styrene-butadiene rubber compared to conventional modifiers containing only one amino group per molecule. Additionally, the degree of bonding of the active terminal of the styrene-butadiene copolymer is uniform, and when the change in molecular weight distribution before and after coupling is observed, the molecular weight distribution remains constant after coupling, without being significantly increased compared to before coupling. Therefore, the physical properties of the modified styrene-butadiene rubber are not degraded, and the agglomeration of the filler in the rubber composition for the tread rubber layer is prevented, improving the dispersibility of the filler. Consequently, the processability of the rubber composition can be enhanced, and furthermore, the fuel efficiency and wet braking performance of the tire can be improved in a well-balanced manner.

It should be noted that the compound represented by the formula (1) can be produced through a condensation reaction represented by the reaction scheme below.

[Chem. 21]

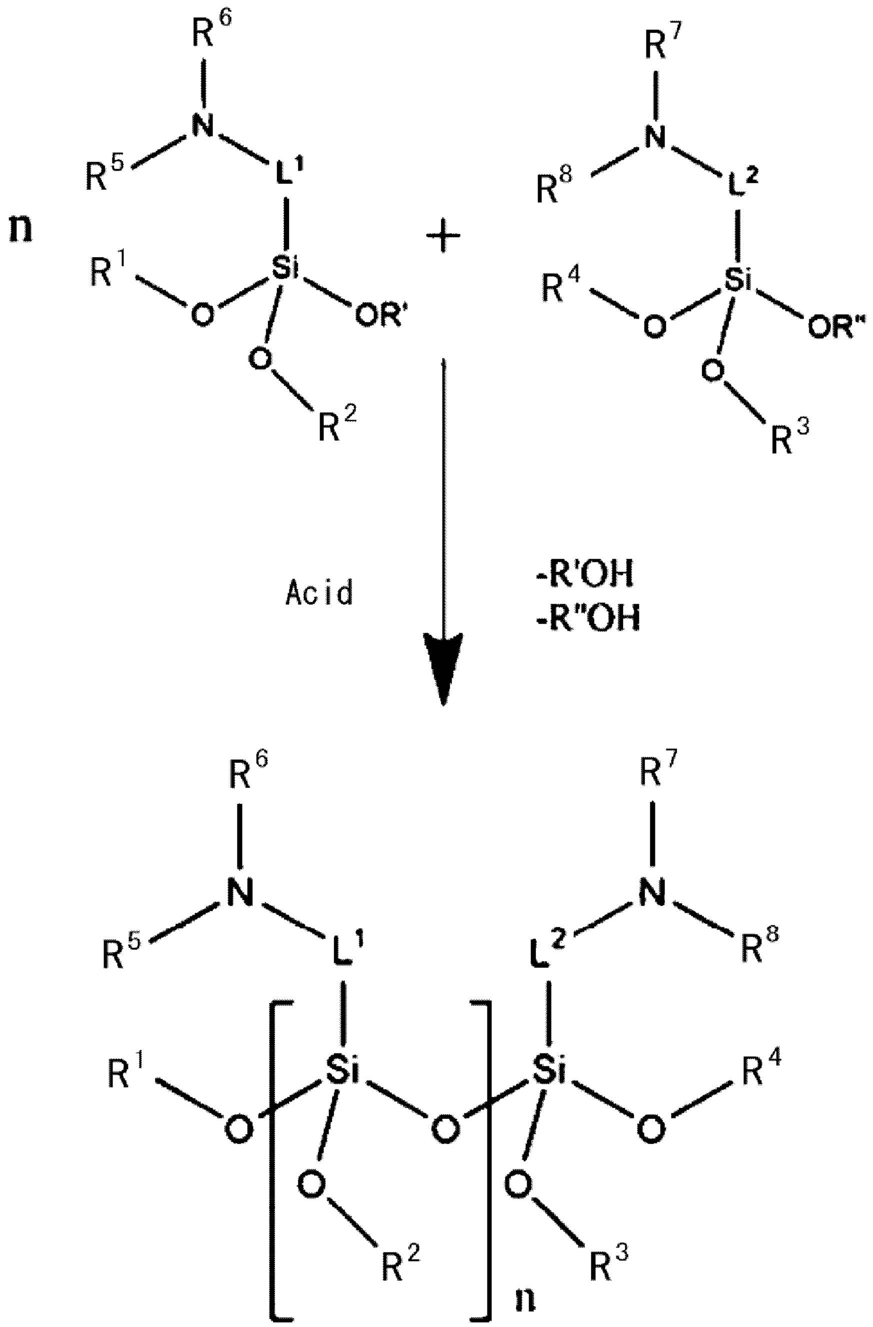


In this reaction scheme, $R^1$ to $R^8$, $L^1$ and $L^2$, and n are the same as those defined in the formula (1), and R' and R" are arbitrary substituents that do not affect the condensation reaction. For example, R' and R" may each independently be identical to any one of $R^1$ to $R^4$.

The reaction in the above-mentioned reaction scheme proceeds in the presence of an acid, and any acid commonly used in condensation reactions can be used without limitation. A skilled person in the art can select the optimal acid according to various process variables for conducting the reaction, such as the type of reactor, starting materials, and reaction temperature.

The styrene-butadiene rubber modified with a modifier containing the compound represented by the formula (1) may have a narrow molecular weight distribution (Mw/Mn, also referred to as the "polydispersity index (PDI)") of 1.1 to 3.0. If the molecular weight distribution of the modified styrene-butadiene rubber is more than 3.0 or less than 1.1, the tensile properties and viscoelasticity of the tread rubber layer may be degraded. Considering the significance of the effects of improving tensile properties and viscoelasticity through control on the molecular weight distribution, the molecular weight distribution of the modified styrene-butadiene rubber is preferably in the range of 1.3 to 2.0. It should be noted that the

modified styrene-butadiene rubber retains a molecular weight distribution similar to that of the styrene-butadiene copolymer before modification due to the use of the modifier.

The molecular weight distribution of the modified styrene-butadiene rubber can be calculated from the ratio (Mw/Mn) of weight-average molecular weight (Mw) to number-average molecular weight (Mn). In calculation, the number-average molecular weight (Mn) is the common average of the individual polymer molecular weights, calculated by measuring the molecular weight of n polymer molecules, summing these values, and dividing by n. The weight-average molecular weight (Mw) represents the molecular weight distribution of the polymer composition. The overall molecular weight average can be expressed in grams per mole (g/mol).

The weight-average molecular weight and number-average molecular weight are each determined as polystyrene-equivalent molecular weights determined by gel permeation chromatography (GPC).

Furthermore, the modified styrene-butadiene rubber satisfies the molecular weight distribution conditions described above, at the same time, it may have a number-average molecular weight (Mn) ranging from 50,000 g/mol to 2,000,000 g/mol, more specifically 200,000 g/mol to 800,000 g/mol. The weight-average molecular weight (Mw) of the modified styrene-butadiene rubber is preferably 100,000 g/mol to 4,000,000 g/mol, and more specifically 300,000 g/mol to 1,500,000 g/mol.

If the weight-average molecular weight (Mw) of the modified styrene-butadiene rubber is less than 100,000 g/mol or the number-average molecular weight (Mn) is less than 50,000 g/mol, the tensile properties of the tread rubber layer may be degraded. On the other hand, if the weight-average molecular weight (Mw) is more than 4,000,000 g/mol or the number-average molecular weight (Mn) is more than 2,000,000 g/mol, the processability of the modified styrene-butadiene rubber is reduced, leading to poor workability of the rubber composition used for the tread rubber layer and mixing difficulties. Additionally, improving the physical properties of the tread rubber layer may become difficult.

More specifically, when the modified styrene-butadiene rubber satisfies the conditions of both the above-described molecular weight distribution and specific weight-average molecular weight (Mw) and number-average molecular weight (Mn) ranges, the viscoelasticity and processability of the rubber composition for the tread rubber layer can be improved in a well-balanced manner.

The modified styrene-butadiene rubber has a vinyl bond content in the butadiene portion of preferably 5% or more, more preferably 10% or more, and preferably 60% or less. By adjusting the vinyl bond content in the butadiene portion within this range, the glass transition temperature can be adjusted to an optimal range.

The Mooney viscosity (MV) at 100°C of the modified styrene-butadiene rubber may be 40 to 140, specifically 60 to 100. When the Mooney viscosity is within this range, the modified rubber exhibits more excellent processability.

The Mooney viscosity can be measured using a Mooney viscometer, such as the MV2000E available from Monsanto Company, at 100°C with a rotor speed of 2 ± 0.02 rpm using a large rotor, for example. The sample used for this measurement is allowed to stand at room temperature (23 ± 3°C) for at least 30 minutes, 27 ± 3 g of the sample is sampled and filled in the die cavity, and the platen is operated to perform the measurement.

The modified styrene-butadiene rubber is preferably modified at one terminal with a modifier containing a compound represented by the above general formula (1), as described above. However, it is more preferable that the other terminal is further modified with a modifier containing a compound represented by the following general formula (2). By modifying both terminals of the modified styrene-butadiene rubber, the dispersion of the filler in the rubber composition for the tread rubber layer can be further improved, allowing for an even higher balance of fuel efficiency and wet braking performance of the tire.

[Chem. 22]

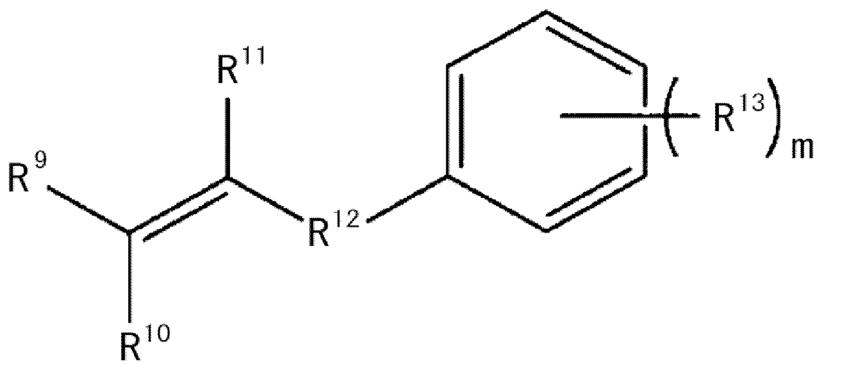 · · · · (2)

In the above general formula (2), $R^9$ to $R^{11}$ each independently represent hydrogen; an alkyl group having 1 to 30 carbon atoms; an alkenyl group having 2 to 30 carbon atoms; an alkynyl group having 2 to 30 carbon atoms; a heteroalkyl

group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

Additionally, in the formula (2), $R^{12}$ represents a single bond; an alkylene group having 1 to 20 carbon atoms which may be substituted with a substituent or unsubstituted; a cycloalkylene group having 5 to 20 carbon atoms which may be substituted with a substituent or unsubstituted; or an arylene group having 5 to 20 carbon atoms which may be substituted with a substituent or unsubstituted, where the substituent is an alkyl group having 1 to 10 carbon atoms, a cycloalkyl group having 5 to 10 carbon atoms, or an aryl group having 6 to 20 carbon atoms.

In the formula (2), $R^{13}$ represents an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or an acting group represented by the following general formula (2a) or general formula (2b), m is an integer from 1 to 5, and at least one of $R^{13}$ is an acting group represented by the following general formula (2a) or general formula (2b), when m is an integer from 2 to 5, multiple $R^{13}$ groups may be identical or different.

[Chem. 23]

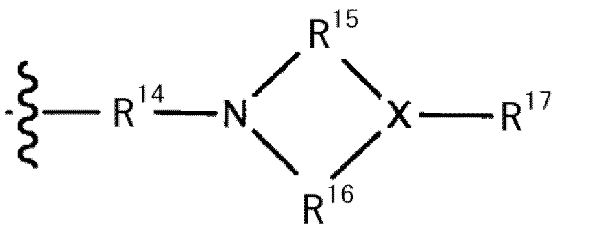

· · · · (2a)

In the above general formula (2a), $R^{14}$ represents an alkylene group having 1 to 20 carbon atoms which may be substituted with a substituent or unsubstituted; a cycloalkylene group having 5 to 20 carbon atoms which may be substituted with a substituent or unsubstituted; or an arylene group having 6 to 20 carbon atoms which may be substituted with a substituent or unsubstituted, where the substituent is an alkyl group having 1 to 10 carbon atoms, a cycloalkyl group having 5 to 10 carbon atoms, or an aryl group having 6 to 20 carbon atoms.

Furthermore, in the formula (2a), $R^{15}$ and $R^{16}$ each independently represent an alkylene group having 1 to 20 carbon atoms which may be substituted with an alkyl group having 1 to 10 carbon atoms, a cycloalkyl group having 5 to 10 carbon atoms, or an aryl group having 6 to 20 carbon atoms, or unsubstituted.

Additionally, in the formula (2a), $R^{17}$ represents hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, and X represents an N, O, or S atom, however, when X is O or S, $R^{17}$ is absent.

[Chem. 24]

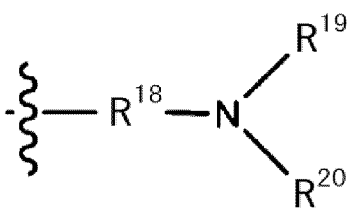

· · · · (2b)

In the above general formula (2b), $R^{18}$ represents an alkylene group having 1 to 20 carbon atoms which may be substituted with a substituent or unsubstituted; a cycloalkylene group having 5 to 20 carbon atoms which may be substituted with a substituent or unsubstituted; or an arylene group having 6 to 20 carbon atoms which may be substituted with a substituent or unsubstituted, where the substituent is an alkyl group having 1 to 10 carbon atoms, a cycloalkyl group having 5 to 10 carbon atoms, or an aryl group having 6 to 20 carbon atoms.

In the formula (2b), $R^{19}$ and $R^{20}$ each independently represent an alkyl group having 1 to 30 carbon atoms; an alkenyl group having 2 to 30 carbon atoms; an alkynyl group having 2 to 30 carbon atoms; a heteroalkyl group having 1 to

30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

In the compound represented by the above general formula (2), $R^9$ to $R^{11}$ each independently represent hydrogen; an alkyl group having 1 to 10 carbon atoms; an alkenyl group having 2 to 10 carbon atoms; or an alkynyl group having 2 to 10 carbon atoms, $R^{12}$ represents a single bond or an unsubstituted alkylene group having 1 to 10 carbon atoms, and $R^{13}$ represents an alkyl group having 1 to 10 carbon atoms; an alkenyl group having 2 to 10 carbon atoms; an alkynyl group having 2 to 10 carbon atoms; or an acting group represented by the above general formula (2a) or general formula (2b), in the above general formula (2a), $R^{14}$ represents an unsubstituted alkylene group having 1 to 10 carbon atoms, $R^{15}$ and $R^{16}$ each independently represent an unsubstituted alkylene group having 1 to 10 carbon atoms, and $R^{17}$ represents an alkyl group having 1 to 10 carbon atoms; a cycloalkyl group having 5 to 20 carbon atoms; an aryl group having 6 to 20 carbon atoms; or a heterocyclic group having 3 to 20 carbon atoms, and in the above general formula (2b), $R^{18}$ represents an unsubstituted alkylene group having 1 to 10 carbon atoms, and $R^{19}$ and $R^{20}$ each independently represent an alkyl group having 1 to 10 carbon atoms; a cycloalkyl group having 5 to 20 carbon atoms; an aryl group having 6 to 20 carbon atoms; or a heterocyclic group having 3 to 20 carbon atoms.

More specifically, the compound represented by the above general formula (2) can be a compound represented by the following structural formulas (2-1) to (2-3).

[Chem. 25]

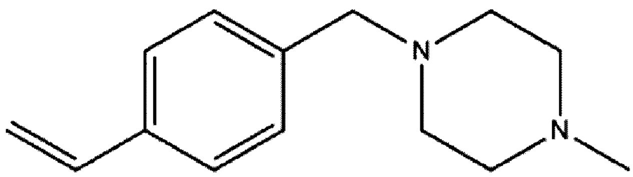

・・・・(2-1)

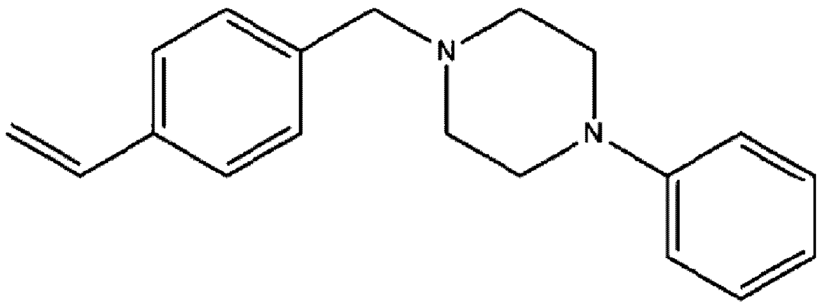

・・・・(2-2)

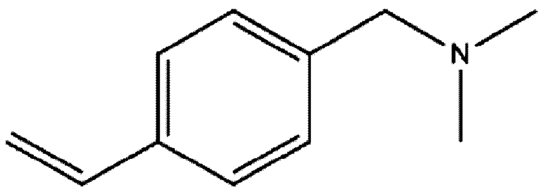

・・・・(2-3)

When the styrene-butadiene copolymer is modified using a modifier containing a compound represented by the above general formula (2), the modifier containing the compound represented by formula (2) is used as a modification initiator.

Specifically, for example, by polymerizing butadiene monomers and styrene monomers in the presence of a modifier containing a compound represented by formula (2) in a hydrocarbon solvent, the modification group derived from the compound represented by formula (2) can be introduced into the styrene-butadiene copolymer.

- Other Rubbers -

The rubber component may further include other rubbers, and the content of other rubbers in 100 parts by mass of

the rubber component is preferably 35 parts by mass or less. Examples of such other rubbers include butadiene rubber (BR), chloroprene rubber (CR), butyl rubber (IIR), halogenated butyl rubber, ethylene-propylene rubber (EPR, EPDM), fluororubber, silicone rubber, and urethane rubber. Among these, diene-based rubbers such as butadiene rubber (BR) and chloroprene rubber (CR) are preferable, with butadiene rubber (BR) being more preferable.

High-cis polybutadiene is preferable as butadiene rubber (BR), and it is preferable that the high-cis polybutadiene has a cis-1,4 bond content of 90 mass% or more. When the rubber component includes butadiene rubber, the content of butadiene rubber in 100 parts by mass of the rubber component is preferably within the range of 1 to 35 parts by mass.

(Resin Component)

The tread rubber layer contains a resin component. The resin component has a difference of the SP value with respect to the SP value of the isoprene skeleton rubber of 1.40 $(cal/cm^3)^{1/2}$ or less. Moreover, the tread rubber layer satisfies the following formula (1):

the mass ratio of the resin component / the isoprene skeleton rubber $\geq$ 0.5 (1).

When the difference of the SP values between the resin component and the isoprene skeleton rubber is 1.40 $(cal/cm^3)^{1/2}$ or less, the resin component exhibits high compatibility with the isoprene skeleton rubber, which controls the mobility of the rubber component and improves the hysteresis loss (tan $\delta$) in the low-temperature range, thereby enhancing the wet braking performance of the tire. From the perspective of further improvement in compatibility, the difference of the SP values between the resin component and the isoprene skeleton rubber is preferably 1.35 $(cal/cm^3)^{1/2}$ or less, more preferably 0.50 $(cal/cm^3)^{1/2}$ or less, even more preferably 0.45 $(cal/cm^3)^{1/2}$ or less, further preferably 0.3 $(cal/cm^3)^{1/2}$ or less, and even preferably 0.25 $(cal/cm^3)^{1/2}$ or less. When the difference of the SP values between the resin component and the isoprene skeleton rubber is 0.50 $(cal/cm^3)^{1/2}$ or less, the compatibility between the resin component and the isoprene skeleton rubber is further improved, further improving the wet braking performance of the tire.

Additionally, when the mass ratio of the resin component to the isoprene skeleton rubber [the resin component / the isoprene skeleton rubber] is 0.5 or more, the wet braking performance of the tire can be further improved. Preferably, the mass ratio of the resin component to the isoprene skeleton rubber [the resin component / the isoprene skeleton rubber] is preferably 0.65 or more, more preferably 0.7 or more, even more preferably 0.8 or more, and preferably 2.0 or less, more preferably 1.9 or less, and even more preferably 1.8 or less.

The content of the resin component is preferably 1 part by mass or more and less than 50 parts by mass per 100 parts by mass of the rubber component. When the content of the resin component in the tread rubber layer is 1 part by mass or more per 100 parts by mass of the rubber component, the effects of the resin component are sufficiently exhibited. When the content is less than 50 parts by mass, the resin component is less likely to precipitate from the tire, ensuring that the effects of the resin component are fully exhibited. From the perspective of further enhancing the effects of the resin component, the content of the resin component in the tread rubber layer is preferably 5 parts by mass or more, more preferably 7 parts by mass or more, even more preferably 9 parts by mass or more, further preferably 15 parts by mass or more, and even further preferably 17 parts by mass or more, per 100 parts by mass of the rubber component. From the perspective of suppressing the precipitation of the resin component from the tire and preventing degradation of the external appearance of the tire, the content of the resin component in the tread rubber layer is preferably 45 parts by mass or less, more preferably 40 parts by mass or less, per 100 parts by mass of the rubber component.

The resin component is preferably at least partially hydrogenated. By at least partially hydrogenating the resin component, the compatibility with the isoprene skeleton rubber is further improved, which enhances the control of the mobility of the rubber component and improves the hysteresis loss (tan $\delta$) in the low-temperature range, thereby further improving the wet braking performance of the tire.

The resin component preferably has a softening point of higher than 110°C and a polystyrene-equivalent weight-average molecular weight of 200 to 1600 g/mol. By applying a tread rubber layer containing such a resin component to a tire, the wear resistance of the tire can be further improved.

When the softening point of the resin component is higher than 110°C, the tread rubber layer can be sufficiently reinforced, further enhancing the wear resistance of the tire. From the perspective of the wear resistance of the tire, the softening point of the resin component is more preferably 116°C or higher, more preferably 120°C or higher, even more preferably 123°C or higher, and further preferably 127°C or higher. From the perspective of processability, the softening point of the resin component is preferably 160°C or lower, more preferably 150°C or lower, even more preferably 145°C or lower, further preferably 141°C or lower, and even further preferably 136°C or lower.

When the polystyrene-equivalent weight-average molecular weight of the resin component is 200 g/mol or higher, the resin component is less likely to precipitate from the tire, thereby fully exhibiting the effects of the resin component. Additionally, when it is 1600 g/mol or lower, the resin component is more likely to be compatible with the rubber

component.

From the perspective of suppressing the precipitation of the resin component from the tire and preventing degradation of the external appearance of the tire, the polystyrene-equivalent weight-average molecular weight of the resin component is preferably 500 g/mol or higher, more preferably 550 g/mol or higher, even more preferably 600 g/mol or higher, further preferably 650 g/mol or higher, and even further preferably 700 g/mol or higher. From the perspective of enhancing the compatibility of the resin component with the rubber component and further increasing the effectiveness of the resin component, the polystyrene-equivalent weight-average molecular weight of the resin component is preferably 1570 g/mol or lower, more preferably 1530 g/mol or lower, more preferably 1500 g/mol or lower, more preferably 1470 g/mol or lower, more preferably 1430 g/mol or lower, more preferably 1400 g/mol or lower, more preferably 1370 g/mol or lower, more preferably 1330 g/mol or lower, more preferably 1300 g/mol or lower, more preferably 1200 g/mol or lower, more preferably 1100 g/mol or lower, more preferably 1000 g/mol or lower, even more preferably 950 g/mol or lower.

The ratio ($Ts_{HR}/Mw_{HR}$) of the softening point ($Ts_{HR}$, unit: °C) to the weight-average molecular weight ($Mw_{HR}$, unit: g/mol) of the resin component is preferably 0.07 or higher, more preferably 0.083 or higher, more preferably 0.095 or higher, more preferably 0.104 or higher, more preferably 0.125 or higher, more preferably 0.135 or higher, more preferably 0.14 or higher, and even more preferably 0.141 or higher. Additionally, the ratio ($Ts_{HR}/Mw_{HR}$) is preferably 0.25 or lower, preferably 0.24 or lower, preferably 0.23 or lower, preferably 0.19 or lower, more preferably 0.18 or lower, and even more preferably 0.17 or lower.

Examples of the resin include $C_5$-based resins, $C_5/C_9$-based resins, $C_9$-based resins, terpene-based resins, dicyclopentadiene-based resins, and terpene-aromatic compound-based resins, and these resins can be used alone or in combination.

Additionally, the above-described resin component that is at least partially hydrogenated refers to a resin obtained by the reductive hydrogenation of a resin. Examples of the resin that serves as the raw material for the resin component that is hydrogenated include $C_5$-based resins, $C_5/C_9$-based resins, $C_9$-based resins, terpene-based resins, dicyclopentadiene-based resins, and terpene-aromatic compound-based resins, and these resins can be used alone or in combination.

Examples of the $C_5$-based resins include aliphatic petroleum resins obtained by (co)polymerizing the $C_5$ fraction obtained by thermal cracking of naphtha in the petrochemical industry.

The $C_5$ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. A commercially available product can be used as the $C_5$-based resin.

The $C_5/C_9$-based resins refer to $C_5/C_9$-based synthetic petroleum resins. Examples of these $C_5/C_9$-based resins include solid polymers obtained by polymerizing a petroleum-derived $C_5$-$C_{11}$ fraction using a Friedel-Crafts catalyst such as $AlCl_3$ or $BF_3$. More specifically, examples include a copolymer having, as the main component, styrene, vinyltoluene, α-methylstyrene, indene, and the like.

As the $C_5/C_9$-based resin, a resin including a small amount of $C_9$ or higher components is preferable in terms of compatibility with the rubber component. Here, including "a small amount of $C_9$ or higher component" means that the amount of $C_9$ or higher component in the total amount of the resin is less than 50 mass%, preferably 40 mass% or less. A commercially available product can be used as the $C_5/C_9$-based resin, for example.

The $C_9$-based resins refer to $C_9$-based synthetic petroleum resins, such as a solid polymer obtained by polymerizing a $C_9$ fraction using a Friedel-Crafts catalyst such as $AlCl_3$ or $BF_3$, for example.

Examples of the $C_9$-based resin include copolymers including indene, α-methylstyrene, vinyltoluene, or the like as main components.

The terpene-based resin is a solid-state resin obtained by compounding turpentine, which is obtained simultaneously when obtaining rosin from pine trees, or a polymerizable component separated from the turpentine, and then polymerizing the turpentine or the polymerizable component using a Friedel-Crafts catalyst. Examples of the terpene-based resins include β-pinene resins and α-pinene resins. A typical example of the terpene-aromatic compound-based resin is a terpene-phenol resin. The terpene-phenol resins may be obtained through various methods including: causing terpenes and various phenols to react with each other using a catalyst for the Friedel-Crafts reaction, or further condensing the resultant with formalin. The terpene as raw material is not limited. The terpene is preferably monoterpene hydrocarbon such as α-pinene or limonene, more preferably contains α-pinene, and is particularly preferably α-pinene. The resin may contain styrene, etc., in the skeleton.

The dicyclopentadiene-based resin refers to, for example, resins obtained by polymerizing dicyclopentadiene using a Friedel-Crafts catalyst, such as $AlCl_3$ or $BF_3$, or the like.

Moreover, the resin serving as the raw material for the resin component that is hydrogenated may include, for example, a resin obtained by copolymerizing a $C_5$ fraction and dicyclopentadiene (DCPD) ($C_5$/DCPD-based resin).

Here, if the dicyclopentadiene-derived component accounts for 50 mass% or more of the total amount of the resin, the $C_5$/DCPD-based resin is classified as a dicyclopentadiene-based resin. If the dicyclopentadiene-derived component accounts for less than 50 mass% of the total amount of the resin, the $C_5$/DCPD-based resin is classified

as a $C_5$-based resin. The same applies even if a small amount of a third component, etc., is included.

From the perspective of improving compatibility between the rubber component and the resin component, the resin component is preferably at least one selected from the group consisting of hydrogenated $C_5$-based resins, hydrogenated $C_5/C_9$-based resins, hydrogenated dicyclopentadiene-based resins (hydrogenated DCPD-based resins), and hydrogenated terpene-based resin, more preferably at least one selected from the group consisting of hydrogenated $C_5$-based resins and hydrogenated $C_5/C_9$-based resins, and even more preferably a hydrogenated $C_5$-based resin. Furthermore, it is preferably a resin that has a DCPD structure or a hydrogenated cyclic structure in at least monomers. When the resin component is at least one selected from the group consisting of hydrogenated $C_5$-based resins, hydrogenated $C_5/C_9$-based resins, hydrogenated dicyclopentadiene-based resins, and hydrogenated terpene-based resins, the wet braking performance of a tire comprising a tread rubber layer can be further improved, and high fuel efficiency can also be further enhanced.

(Filler)

The tread rubber layer contains a filler. By containing the filler, the reinforcing property of the tread rubber layer is improved.

The content of the filler in the tread rubber layer is preferably in the range of 40 to 125 parts by mass per 100 parts by mass of the rubber component. When the content of the filler in the tread rubber layer is 40 parts by mass or more per 100 parts by mass of the rubber component, the tread rubber layer is sufficiently reinforced, further improving the wear resistance of the tire. Additionally, when the content of the filler is 125 parts by mass or less, the elastic modulus of the tread rubber layer does not become excessively high, further improving the wet braking performance of the tire. From the perspective of reducing rolling resistance (improving high fuel efficiency), the content of the filler in the tread rubber layer is more preferably 45 parts by mass or more, even more preferably 50 parts by mass or more, and further preferably 55 parts by mass or more per 100 parts by mass of the rubber component. From the perspective of improving wet braking performance of the tire, the content of the filler in the tread rubber layer is more preferably 105 parts by mass or less, even more preferably 100 parts by mass or less, and further preferably 95 parts by mass or less per 100 parts by mass of the rubber component.

- Silica -

The filler preferably contains silica, and more preferably contains silica with a nitrogen adsorption specific surface area (BET method) of 80 $m^2/g$ or more and less than 330 $m^2/g$. When the nitrogen adsorption specific surface area (BET method) of the silica is 80 $m^2/g$ or more, the tire can be sufficiently reinforced, and the rolling resistance of the tire can be further reduced. When the nitrogen adsorption specific surface area (BET method) of the silica is less than 330 $m^2/g$, the elastic modulus of the tread rubber layer does not become excessively high, thereby further improving the wet braking performance of the tire. From the perspective of further reducing rolling resistance and improving the wear resistance of the tire, the nitrogen adsorption specific surface area (BET method) of the silica is preferably 110 $m^2/g$ or more, more preferably 130 $m^2/g$ or more, even more preferably 150 $m^2/g$ or more, and further preferably 180 $m^2/g$ or more. From the perspective of further improving the wet braking performance of the tire, the nitrogen adsorption specific surface area (BET method) of the silica is preferably 300 $m^2/g$ or less, more preferably 280 $m^2/g$ or less, and further preferably 270 $m^2/g$ or less.

Examples of the silica include wet silica (hydrous silicate), dry silica (anhydrous silicate), calcium silicate, and aluminum silicate. Among these, wet silica is preferable. These types of silica may be used alone or in combination of two or more types.

The silica may preferably be plant-derived silica. From the perspective of reducing environmental impact, silica derived from siliceous plants is preferred. Examples of such siliceous plants include mosses, ferns, horsetails, Cucurbitaceae plants, Urticaceae plants, and Poaceae plants, for example. Of these plants, Poaceae plants are preferred, that is, silica derived from Poaceae plants is preferred as the plant-derived silica. Silica derived from Poaceae plants is environmentally preferable from various aspects because raw materials can be locally sourced near tire manufacturing plants, reducing transportation and storage energy and costs.

Examples of the Poaceae plants include rice, bamboo, and sugarcane, with rice being the most preferred. Since rice is widely cultivated for food, it can be locally sourced in many regions. Additionally, rice husks are produced in large quantities as industrial waste, making them easily available in large quantities. Therefore, from the perspective of availability, silica derived from rice husks (hereinafter referred to as "rice husk silica") is particularly preferred. The utilization of rice husk silica is environmentally preferable in various aspects because it allows for the effective utilization of rice husks, which would otherwise be industrial waste, while also reducing transportation and storage energy and costs. The rice husk silica may be in the form of a powder of rice husk charcoal obtained by heating and carbonizing rice husks or precipitated silica produced by extracting rice husk ash with alkali, where the ash is generated when rice husks are burned

as fuel in biomass boilers. The method of producing rice husk charcoal is not particularly limited, and various known methods can be used. For example, rice husks can be pyrolyzed by steam roasting in a kiln to obtain rice husk charcoal. The thus-obtained rice husk charcoal can then be ground using a known pulverizer (e.g., a ball mill) and classified into a specified particle size range to obtain rice husk charcoal powder. The precipitated silica derived from rice husks can be produced by methods such as the one described in JP 2019-38728 A.

From the perspective of enhancing the mechanical strength of the tread rubber layer and further improving the wear resistance of the tire, the content of silica in the tread rubber layer is preferably 40 parts by mass or more, more preferably 45 parts by mass or more, even more preferably 50 parts by mass or more, and further preferably 55 parts by mass or more per 100 parts by mass of the rubber component. From the perspective of further improving wet braking performance of the tire, the content of silica in the tread rubber layer is preferably 125 parts by mass or less, more preferably 105 parts by mass or less, even more preferably 100 parts by mass or less, and further preferably 95 parts by mass or less per 100 parts by mass of the rubber component.

- Carbon black -

The filler may also preferably contain carbon black. The carbon black can reinforce the tread rubber layer and improve the wear resistance of the tire.

Carbon black is not particularly limited. Examples include GPF, FEF, HAF, ISAF, and SAF-grade carbon blacks, for example. These carbon blacks may be used alone or in combination of two or more types. The carbon black may also be recycled carbon black.

In this specification, "recycled carbon black" refers to carbon black obtained by recovering carbon black from waste materials subjected to recycling. Examples of such waste materials subjected to recycling include rubber products containing carbon black, particularly vulcanized rubber products, represented by used rubber and used tires, as well as waste oil. Recycled carbon black differs from carbon black produced directly from hydrocarbons such as petroleum or natural gas, that is, carbon black that is not recycled. It should be noted that "used" in this context includes not only materials that were discarded after actual use, but also materials that were manufactured but discarded without actual use.

From the perspective of enhancing the wear resistance of the tread rubber layer and the tire having the tread rubber layer applied thereto, the content of carbon black in the tread rubber layer is preferably 1 part by mass or more, more preferably 3 parts by mass or more, and further preferably 5 parts by mass or more per 100 parts by mass of the rubber component. Furthermore, from the perspective of workability of the rubber composition used for the production of the tread rubber layer, the content of carbon black in the tread rubber layer (the rubber composition for the tread rubber layer) is preferably 20 parts by mass or less, more preferably 15 parts by mass or less per 100 parts by mass of the rubber component.

When the filler contains both silica and carbon black, the proportion of silica in the total amount of silica and carbon black is preferably 80 mass% or more and less than 100 mass%, and more preferably 90 mass% or more and less than 100 mass%. By setting the proportion of silica to 80 mass% or more, the mechanical strength of the tread rubber layer is improved, and the rolling resistance of the tire can be further reduced.

-- Other Fillers --

The filler may also contain, in addition to silica and carbon black, inorganic fillers such as clay, talc, calcium carbonate, and aluminum hydroxide, for example.

The other fillers described above are preferably contained so that the proportion of silica in the fillers is 70 mass% or more. When the proportion of silica in the fillers is 70 mass% or more, the mechanical strength of the tread rubber layer is improved, and the rolling resistance of the tire is further reduced. The proportion of silica in the fillers is more preferably 80 mass% or more, even more preferably 85 mass% or more, and further preferably 90 mass% or more and less than 100 mass%.

(Styrenic Thermoplastic Elastomer)

The tread rubber layer may include a styrenic thermoplastic elastomer (TPS). The styrenic thermoplastic elastomer (TPS) has styrenic polymer blocks (hard segments) and conjugated diene polymer blocks (soft segments), where the styrenic polymer portions form physical crosslinks as bridge points while the conjugated diene polymer blocks provide rubber elasticity. The double bonds in the conjugated diene polymer blocks (soft segments) may be partially or fully hydrogenated.

It should be noted that, although the styrenic thermoplastic elastomer (TPS) is thermoplastic, the rubber component (preferably, a diene-based rubber) is not thermoplastic. Therefore, in this specification, the styrenic thermoplastic elastomer (TPS) is not included in the rubber component. The content of the styrenic thermoplastic elastomer (TPS)

is preferably in the range of 1 to 30 parts by mass per 100 parts by mass of the rubber component.

Examples of the styrenic thermoplastic elastomer (TPS) include styrene/butadiene/styrene (SBS) block copolymer, styrene/isoprene/styrene (SIS) block copolymer, styrene/butadiene/isoprene/styrene (SBIS) block copolymer, styrene/butadiene (SB) block copolymer, styrene/isoprene (SI) block copolymer, styrene/butadiene/isoprene (SBI) block copolymer, styrene/ethylene/butylene/styrene (SEBS) block copolymer, styrene/ethylene/propylene/styrene (SEPS) block copolymer, styrene/ethylene/ethylene/propylene/styrene (SEEPS) block copolymer, styrene/ethylene/butylene (SEB) block copolymer, styrene/ethylene/propylene (SEP) block copolymer, and styrene/ethylene/ethylene/propylene (SEEP) block copolymer.

(Other Components)

The tread rubber layer may appropriately include, within a range that does not impair the object of the present disclosure, the above-described rubber component, resin component, filler, styrenic thermoplastic elastomer, and, if necessary, various components commonly used in the rubber industry, such as silane coupling agents, antioxidants, waxes, softeners, processing aids, stearic acid, zinc oxide (zinc white), vulcanization accelerators, and vulcanizing agents, for example. Commercial products are suitable for use as these compounding agents.

When the tread rubber layer contains silica, a silane coupling agent is preferably included to enhance the effect of the silica. Examples of silane coupling agents include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. The content of the silane coupling agent is preferably in the range of 2 to 20 parts by mass, more preferably in the range of 5 to 15 parts by mass per 100 parts by mass of the silica.

Examples of the antioxidants include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the antioxidants is not particularly limited and is in the range of preferably 0.1 to 5 parts by mass, more preferably 1 to 4 parts by mass, per 100 parts by mass of the rubber component.

Examples of the wax include paraffin wax and microcrystalline wax, for example. The content of the waxes is not particularly limited and is in the range of preferably 0.1 to 5 parts by mass, more preferably 1 to 4 parts by mass, per 100 parts by mass of the rubber component.

The content of the zinc oxide (zinc white) is not particularly limited and is in the range of preferably 0.1 to 10 parts by mass, more preferably 1 to 8 parts by mass, per 100 parts by mass of the rubber component.

Examples of the vulcanization accelerators include sulfenamide-based vulcanization accelerators, guanidine-based vulcanization accelerators, thiazole-based vulcanization accelerators, thiuram-based vulcanization accelerators, and dithiocarbamate-based vulcanization accelerators. These vulcanization accelerators may be used alone, or two or more of these may be used in combination. The content of the vulcanization accelerators is not particularly limited and is preferably in the range of 0.1 to 5 parts by mass, more preferably in the range of 0.2 to 4 parts by mass, per 100 parts by mass of the rubber component.

Examples of the vulcanizing agent include sulfur. The content of the vulcanizing agent is preferably in the range of 0.1 to 10 parts by mass, more preferably in the range of 1 to 4 parts by mass as sulfur per 100 parts by mass of the rubber component.

(Manufacturing Method of Tread Rubber Layer)

The manufacturing method of the tread rubber layer is not particularly limited. For example, a rubber composition for the tread rubber layer can be produced by compounding the above-described rubber component, resin component, and filler with various components appropriately selected as needed, followed by kneading, heat treatment, extrusion, etc. Furthermore, the resulting rubber composition can be vulcanized to produce vulcanized rubber.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, that are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.
There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.
There are no particular limitations on the apparatus, method, conditions, etc., for performing the vulcanization, which may be appropriately selected depending on the purpose. Examples of the apparatus for vulcanization include molding vulcanizers and other apparatuses generally used for vulcanizing rubber compositions. The conditions for vulcanization are such that the temperature is, for example, about 100°C to 190°C.

<<Reinforcing Layer Including Organic Fiber Cord>>

The tire of the present embodiment includes a reinforcing layer including an organic fiber cord inward of the tread rubber described above layer in the tire radial direction. Here, the reinforcing layer including the organic fiber cord may be any of the belt layers 6A and 6B or the belt reinforcing layers 7A and 7B of the tire 1 illustrated in FIG. 1, and is preferably the belt reinforcing layers 7A and 7B.
The organic fiber cord in the reinforcing layer has an elastic modulus at 1-2% elongation of 4.0 to 30 mN/(dtex·%), preferably 5.0 mN/(dtex·%) or more, and preferably 10 mN/(dtex·%) or less.
Here, the elastic modulus at 1-2% elongation is calculated by converting the slope (N/%) of the load corresponding to 1% elongation and the load corresponding to 2% elongation on the load-elongation curve of the organic fiber cord into a value per 1 dtex.
If the elastic modulus at 1-2% elongation of the organic fiber cord is lower than 4.0 mN/(dtex·%), the rigidity of the tread portion 4 of the tire 1 becomes insufficient, leading to a decrease in steering stability of the tire. On the other hand, if the elastic modulus at 1-2% elongation of the organic fiber cord is greater than 30 mN/(dtex·%), the rigidity of the reinforcing layer including the organic fiber cords becomes too high, reducing the durability of the layers inward of the reinforcing layer in the tire radial direction (for example, when the reinforcing layer including the organic fiber cord is the belt reinforcing layers 7A and 7B, the durability of the belt 6 is decreased). In contrast, in the tire of the present embodiment, by combining the reinforcing layer including an organic fiber cord having an elastic modulus at 1-2% elongation of 4.0 to 30 mN/(dtex·%) with the tread rubber layer 9 described above, it is possible to improve wet braking performance and fuel efficiency without reducing steering stability of the tire. Moreover, when the elastic modulus at 1-2% elongation of the organic fiber cord is 5.0 mN/(dtex·%) or more, the steering stability of the tire is improved, and when it is 10 mN/(dtex·%) or less, the durability of the layers inward of the reinforcing layer in the tire radial direction can be sufficiently ensured.
The organic fiber cord in the reinforcing layer preferably has a breaking strength of 6.5 cN/dtex or more and a breaking elongation of 10% or more.
An organic fiber cord having a breaking strength of 6.5 cN/dtex or more and a breaking elongation of 10% or more has high strength at break and large elongation at break. By applying an organic fiber cord with such physical properties to the reinforcing layer, it is possible to improve the high-speed durability of the tire and also improve the steering stability of the tire.
The material of the organic fiber cord in the reinforcing layer is not particularly limited, but examples include polyester such as polyethylene terephthalate (PET) and polyethylene naphthalate (PEN); nylon such as 6-nylon, 6,6-nylon, 4,6-nylon, and 4,10-nylon; and cellulose such as rayon and lyocell. Among these, polyethylene terephthalate is preferred, that is, it is preferable that the organic fiber cord as the reinforcing material of the reinforcing layer is a cord made of polyethylene terephthalate (hereinafter, sometimes simply referred to as "polyethylene terephthalate cord"). The polyethylene terephthalate cord has higher rigidity compared to commonly used nylon cords and the like and is excellent in the effect of improving the steering stability of the tire. Therefore, a tire including a cord made of polyethylene terephthalate as the organic fiber cord in the reinforcing layer has an excellent effect of improving the steering stability.
It is preferable that the organic fiber cord in the reinforcing layer has an elastic modulus at 7% elongation of 6.0 mN/(dtex·%) or more. Here, the breaking strength, breaking elongation, and elastic modulus at 7% elongation of the organic fiber cord are those measured at room temperature (23°C). In addition, various physical properties of the organic fiber cord can be measured in accordance with JIS L 1013 "Test Methods for Filament Yarns of Chemical Fibers." The elastic modulus at 7% elongation is calculated by converting the slope (N/%) of the tangent at the point corresponding to 7% elongation on the load-elongation curve of the cord into a value per 1 dtex. The slope of the tangent at the point corresponding to 7% elongation on the load-elongation curve refers to the slope of the tangent S at the point corresponding to 7% elongation on the load-elongation curve C of the cord, as illustrated in FIG. 2. An organic fiber cord having an elastic modulus at 7% elongation of 6.0 mN/(dtex·%) or more has high strength at break, large elongation at break, and a high

elastic modulus at 7% elongation. By applying an organic fiber cord with such physical properties to the reinforcing layer to assist the rigidity of the belt layer, the steering stability of the tire can be improved.

It is preferable that the organic fiber cord has an elastic modulus at a 29.4 N load measured at 160°C of 2.5 mN/(dtex·%) or more. Here, the elastic modulus at a 29.4 N load measured at 160°C is calculated by converting the slope (N/%) of the tangent at the point corresponding to a 29.4 N load on the load-elongation curve of the cord measured at 160°C into a value per 1 dtex.

It should be noted that the elastic modulus is measured at 160°C because the internal temperature of the tire rises as high-speed driving continues, and the temperature of the belt reinforcing layer reaches 160°C at the point when tire failure occurs during high-speed driving. In particular, polyethylene terephthalate cords exhibit a significant decrease in elastic modulus at high temperatures compared to room temperature. Even if a cord has high elasticity at room temperature, it cannot exhibit sufficient belt reinforcing effects (the effect of improving durability against bump input and the effect of suppressing belt protrusion) if the cord cannot maintain a high elastic modulus at high temperatures. Therefore, the elastic modulus at high temperatures has significant importance. By keeping the elastic modulus of the cord at a 29.4 N load measured at 160°C to 2.5 mN/(dtex·%) or more, the high-speed durability of the tire can be improved, and the amount of belt protrusion during high-speed driving can be suppressed, thereby reducing the stress during deflection and rebound of the tire and improving the steering stability of the tire during high-speed driving.

To improve the elastic modulus of the organic fiber cord at 160°C, it is preferable to perform dip treatment under high tension. The present inventors have adjusted the tension applied to the cord during dip treatment, produced organic fiber cords with various elastic moduli, coated the obtained dipped cords with a coating rubber, applied them to the reinforcing layer, and examined the steering stability of the tire. As a result, it was found that when the elastic modulus of the cord at a 29.4N load measured at 160°C was in the range of 2.5 mN/(dtex·%) or higher, the improvement in steering stability of the tire became remarkable.

Here, to sufficiently enhance the elasticity of the organic fiber cord, it is preferable to set the tension during the adhesive treatment to $6.9 \times 10^{-2}$ N/tex or more. However, the method for enhancing the elasticity of the organic fiber cord is not limited to this approach and other methods such as reducing the twist of the organic fiber cord may be employed. The adhesive treatment includes dry treatment, hot treatment, normalization treatment, etc., and is performed by appropriately adjusting the temperature and time in addition to the tension. In the present disclosure, although the adhesive treatment may be performed using either a single-bath or two-bath process, a two-bath process is preferably used, and it is preferable to apply a tension of $6.9 \times 10^{-2}$ N/tex or more to the organic fiber cord during the hot treatment of the two-bath process.

The organic fiber cord preferably has a twist factor $\alpha$ of 500 to 2500 expressed by the following formula (2):

$$\alpha = T \times D^{1/2} \quad \cdots \quad (2)$$

in the formula, $\alpha$ represents the twist factor, T represents the number of twists (turns/100 mm), and D represents the total fineness of the cord (dtex). When the twist factor $\alpha$ of the organic fiber cord is 500 or more, the binding force of filament is increased, ensuring sufficient adhesion, and when it is 2500 or less, a sufficient elastic modulus can be exhibited to achieve the effect of improving durability against bump input and the effect of suppressing belt protrusion.

Furthermore, the organic fiber cord preferably has a total fineness of 1000 to 3500 dtex. When the total fineness of the organic fiber cord is 1000 dtex or more, a sufficient elastic modulus can be exhibited to achieve the effect of improving durability against bump input and the effect of suppressing belt protrusion, and when it is 3500 dtex or less, the cord density can be increased, and sufficient rigidity per unit width can be ensured.

Since an uncured tire expands by several percent in the tire radial direction during vulcanization, if the elastic modulus of the organic fiber cord used in the reinforcing layer is high, it may not be able to follow the tire expansion during vulcanization molding. For example, when the organic fiber cord is used in the belt reinforcing layers 7A and 7B in FIG. 1, the organic fiber cord in the belt reinforcing layer 7A and the cord in the outermost belt layer (belt layer 6B in FIG. 1) constituting the belt 6 may come into direct contact without the coating rubber in between. Similarly, when the organic fiber cord is used in the outermost belt layer constituting the belt 6 (belt layer 6B in FIG. 1), the organic fiber cord in the belt layer 6B and the cord in the belt layer 6A may come into direct contact without the coating rubber in between. Therefore, it is preferable to design the diameter of the uncured tire to be somewhat larger in advance and to appropriately adjust the tension when winding the cord coated with the coating rubber to form the reinforcing layer, so that a sufficient gauge is ensured between the cords in the belt layer 6B and the reinforcing layer 7A, or between the belt layer 6A and the belt layer 6B. Accordingly, the organic fiber cord preferably has an elongation ratio in the tire after vulcanization of 2% or less relative to the original length of the cord before vulcanization. By molding the tire with a cord elongation ratio of 2% or less, when the organic fiber cord is used in the belt reinforcing layer 7A, contact between the organic fiber cord and the belt layer 6B can be prevented. Additionally, when the organic fiber cord is used in the belt layer 6B, contact between the organic fiber cord and the belt layer 6A can be prevented. In both cases, separation at the belt ends during driving can be prevented.

The raw material for the organic fiber cord is not particularly limited and may be derived from synthetic sources,

biological sources, mechanically recycled sources in which PET products such as PET bottles are crushed, melted, and re-spun, or chemically recycled sources in which PET products such as PET bottles are depolymerized and repolymerized.

Furthermore, the form of the organic fiber cord is not particularly limited and may have a single-twist structure or a twisted structure (such as a double-twist structure). In the case of a single-twist structure, for example, the twisted yarn cord can be obtained by aligning the raw yarns and applying a twist in one direction. In the case of a double-twist structure, for example, a twisted yarn cord can be obtained by applying a first twist to the raw yarn, then combining multiple yarns, and applying a second twist in the opposite direction.

The organic fiber cord (particularly, the polyethylene terephthalate cord) is preferably subjected to an adhesive treatment using an adhesive composition containing a thermoplastic polymer (A), a thermally reactive-type aqueous urethane resin (B), and an epoxy compound (C), or an adhesive composition further containing a rubber latex (D) in addition to (A) to (C), wherein the main chain of the thermoplastic polymer (A) is substantially free of carbon-carbon double bonds with addition reactivity and has at least one crosslinkable functional group as a pendant group. By performing an adhesive treatment using the adhesive composition, the adhesion between the organic fiber cord and the coating rubber at high temperatures can be improved.

Conventionally, the adhesive treatment of the organic fiber cord (particularly, the polyethylene terephthalate cord) involves a so-called two-bath process in which epoxy or isocyanate is applied to the cord surface, followed by treatment with a resin formed by mixing resorcin, formaldehyde, and latex (hereinafter referred to as RFL resin). However, with this approach, the resin used in the first-stage bath can become extremely hard, increasing the strain input into the cord, which can decrease the fatigue resistance of the cord. Additionally, while such a resin can achieve sufficient adhesion between the cord and the coating rubber at room temperature, the adhesion may be reduced significantly at high temperatures of 130°C or higher. In contrast, using a single-bath mixture containing a thermoplastic polymer (A) having at least one functional group with a crosslinkable functional group as a pendant group and being substantially free of carbon-carbon double bonds with addition reactivity in the main chain structure thereof, a thermally reactive-type aqueous urethane resin (B), and an epoxy compound (C) can ensure sufficient adhesion with the coating rubber even at high temperatures of 180°C or higher without hardening the cord.

The main chain of the thermoplastic polymer (A) has primarily a linear structure, and the main chain is preferably an ethylene-based addition polymer such as an acrylic polymer, vinyl acetate-based polymer, and vinyl acetate-ethylene-based copolymer; or an urethane-based high-molecular polymer, for example. However, the thermoplastic polymer (A) is not limited to an ethylene-based addition polymer or urethane-based high-molecular polymer, as long as it can inhibit flowability of the resin at high temperatures and ensure the rupture tenacity of the resin through crosslinking of the functional group on the pendant group.

Preferred examples of the functional group on the pendant group of the thermoplastic polymer (A) include oxazoline groups, bismaleimide groups, (blocked) isocyanate groups, aziridine groups, carbodiimide groups, hydrazino groups, epoxy groups, and epithio groups.

The thermoplastic polymer (A), the thermally reactive-type aqueous urethane resin (B), the epoxy compound (C), and the rubber latex (D) described above that can be used may be those disclosed in JP application No. 2023-040157 or those disclosed in JP application No. 2023-030762.

In the adhesive treatment of the organic fiber cord (particularly, the polyethylene terephthalate cord), a three-component mixture (adhesive composition) of the thermoplastic polymer (A), the thermally reactive-type aqueous urethane resin (B), and the epoxy compound (C) is preferably used as the treatment liquid for the first-stage bath, and a conventional RFL resin liquid is used as the treatment liquid for the second-stage bath. Additionally, in the above adhesive treatment, it is also possible to perform single-stage bath treatment using a mixture (adhesive composition) of the thermoplastic polymer (A), the thermally reactive-type aqueous urethane resin (B), the epoxy compound (C), and the rubber latex (D).

In the above-described adhesive composition, the proportion of the thermoplastic polymer (A) (dry mass ratio) is preferably 2% to 75%, the proportion of the thermally reactive-type aqueous urethane resin (B) (dry mass ratio) is preferably 15% to 87%, the proportion of the epoxy compound (C) (dry mass ratio) is preferably 11% to 70%, and the proportion of the rubber latex (D) (dry mass ratio) is preferably 20% or less.

In the meantime, from the perspective of environmental protection, it is preferable to use a dip treatment solution that does not contain resorcin and formaldehyde as the adhesive composition for the organic fiber cord. An example of such a dip treatment solution is, for example, a composition containing a rubber latex (a) with an unsaturated diene and one or more compounds (b) selected from compounds containing a skeletal structure made of polyether and an amine functional group, compounds with an acrylamide structure, polypeptides, polylysine, and carbodiimides. Additionally, an example of such a dip treatment solution is a composition containing, in addition to the above-described rubber latex (a) and compound (b), one or more selected from an aqueous compound (c) with a (thermally dissociative blocked) isocyanate group, a polyphenol (d), and a polyvalent metal salt (e).

Furthermore, as a dip treatment solution that does not contain resorcin and formaldehyde, a composition containing polyphenols (I) and aldehydes (II) may also be used. Such a composition may further include at least one of an

isocyanate compound (III) and a rubber latex (IV), in addition to the polyphenols (I) and the aldehydes (II).

When an adhesive composition to treat (coat) the organic fiber cord with adhesive contains the polyphenols (I) and the aldehydes (II), good adhesion can be achieved even when resorcin is not used, considering environmental load.

[Polyphenols (I)]

When the adhesive composition includes the polyphenols (I) as a resin component, the adhesion with the organic fiber cord can be enhanced. Here, the polyphenols (I) are typically water-soluble polyphenols and are not particularly limited as long as they are polyphenols other than resorcin (resorcinol). In the polyphenols (I), the number of aromatic rings or hydroxyl groups can be appropriately selected.

From the perspective of achieving further excellent adhesion, the polyphenols (I) preferably have two or more hydroxyl groups, and more preferably have three or more hydroxyl groups. When the polyphenols have three or more hydroxyl groups, the polyphenols or the condensates thereof dissolve in the adhesive composition (dip treatment solution) containing water. Since this allows the polyphenols to be uniformly distributed in the adhesive composition, further excellent adhesion can be achieved. Furthermore, if the polyphenols (I) are polyphenols containing two or more aromatic rings, each aromatic ring may have two or three hydroxyl groups located at the ortho, meta, or para positions.

As the polyphenols (I), the polyphenol compounds disclosed in WO 2022/130879 A1 can be used, for example. These polyphenols (I) may be used alone or in combination of two or more.

[Aldehydes (II)]

When the adhesive composition includes the aldehydes (II) as a resin component in addition to the above-described polyphenols (I), high adhesion can be achieved in conjunction with the above-described polyphenols (I). Here, the aldehydes (II) are not particularly limited and can be selected as appropriate depending on the required performances. It should be noted that in this specification, the aldehydes (II) encompass derivatives of aldehydes derived from aldehydes.

Examples of the aldehydes (II) include, for example, monoaldehydes such as formaldehyde, acetaldehyde, butyraldehyde, acrolein, propionaldehyde, chloral, butyraldehyde, caproaldehyde, and allyl aldehyde; aliphatic dialdehydes such as glyoxal, malonaldehyde, succinaldehyde, glutaraldehyde, and adipaldehyde; aldehydes containing an aromatic ring; and dialdehyde starch. These aldehydes (II) can be used alone or in combination of two or more.

The aldehydes (II) are preferably aldehydes having an aromatic ring or contain aldehydes having an aromatic ring because they provide further excellent adhesion. Moreover, the aldehydes (II) are preferably free of formaldehyde. Here, "free of formaldehyde" means, for example, that the formaldehyde content is less than 0.5 mass% of the total mass of the aldehydes.

In the adhesive composition, it is preferable that the polyphenols (I) and the aldehydes (II) are in a condensed state, and the mass ratio of aldehydes having an aromatic ring to polyphenols (the content of aldehydes having an aromatic ring/content of polyphenols) is 0.1 or more and 3 or less. This is because this ratio optimizes the hardness and adhesion of the resin formed as a condensation product of the polyphenols and the aldehydes having an aromatic ring. From a similar perspective, in the adhesive composition, the mass ratio of aldehydes having an aromatic ring to polyphenols (the content of aldehydes having an aromatic ring/content of polyphenols) is more preferably 0.25 or more, and more preferably 2.5 or lower.

The above-described mass ratio refers to the mass ratio based on the mass of the dried materials (solid content ratio).

In addition, the total content of the polyphenols (I) and the aldehydes (II) in the adhesive composition is preferably 3 to 30 mass% because further excellent adhesion is ensured without compromising workability, etc. From a similar perspective, the total content of the polyphenols (I) and the aldehydes (II) in the adhesive composition is more preferably 5 mass% or more and more preferably 25 mass% or less.

The above-described total content also refers to the total content based on the mass of the dried materials (solid content ratio).

[Isocyanate Compound (III)]

The adhesive composition preferably contains an isocyanate compound (III), in addition to the polyphenols (I) and the aldehydes (II) described above. In this case, the adhesion of the adhesive composition is further enhanced through the synergistic effect with the polyphenols (I) and the aldehydes (II).

Here, the isocyanate compound (III) is a compound that has an effect of promoting adhesion to the resin material, which is the adherend of the adhesive composition (e.g., phenol/aldehyde resin obtained through condensation of the polyphenols (I) and the aldehydes (II)), and is a compound that contains an isocyanate group as a polar functional group. The isocyanate compound (III) may be used alone or in combination of two or more.

The isocyanate compound (III) is not particularly limited, but from the perspective of further improving adhesion, it preferably includes a (blocked) isocyanate group-containing aromatic compound. The inclusion of a (blocked) isocyanate group-containing aromatic compound in the adhesive composition results in the distribution of the (blocked) isocyanate group-containing aromatic compound near the interface between the organic fiber cord and the adhesive composition, thereby providing an effect of further promoting the adhesion. This effect allows the adhesive composition to achieve an even higher level of adhesion with the organic fiber cord.

Examples of (blocked) isocyanate group-containing aromatic compounds that may be used include those described in JP application No. 2023-040157 and those described in JP application No. 2023-030762.

The content of the isocyanate compound (III) in the above-described adhesive composition is not particularly limited, but from the perspective of more reliably ensuring further excellent adhesion, the content is preferably 5 to 65 mass%. From a similar perspective, the content of the isocyanate compound (III) in the adhesive composition is more preferably 10 mass% or more and more preferably 45 mass% or less.

It should be noted that the above-mentioned content is the content based on the mass of the dried materials (solid content ratio).

[Rubber Latex (IV)]

The adhesive composition may substantially contain a rubber latex (IV), in addition to the polyphenol (I), the aldehydes (II), and the isocyanate compound (III) described above. This allows the adhesive composition to further enhance adhesion to rubber members.

Here, the rubber latex (IV) is not particularly limited and examples include, besides natural rubber (NR), synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), or vinyl pyridine-styrene-butadiene copolymer rubber (Vp). These rubber latexes (IV) may be used alone or in combination of two or more types.

When preparing an adhesive composition containing the rubber latex (IV), it is preferable to mix the rubber latex (IV) with the phenols (I) and the aldehydes (II) before the isocyanate compound (III) is added.

The content of the rubber latex (IV) in the adhesive composition is preferably 20 mass% or more, more preferably 25 mass% or more, and is preferably 70 mass% or less, and more preferably 60 mass% or less.

The method for producing the adhesive composition is not particularly limited, but examples include, for example, a method of mixing and aging raw materials such as the polyphenols (I), the aldehydes (II), and the rubber latex (IV), or a method of mixing and aging the polyphenols (I) and the aldehydes (II) first, then adding the rubber latex (IV) followed by further aging. In cases where the raw materials of the adhesive composition include the isocyanate compound (III), the method may include adding the rubber latex (IV), aging the mixture, and then adding the isocyanate compound (III).

The reinforcing layer is preferably formed by subjecting the organic fiber cord to an adhesive treatment, then covering it with a coating rubber to form a narrow strip, and subsequently continuously winding it spirally in the tire circumferential direction. There is no particular limitation on the coating rubber as long as it is a general rubber composition capable of covering the organic fiber cord. As the rubber component, a diene-based rubber can be mentioned, and particularly natural rubber or isoprene rubber is preferable. The natural rubber may be modified. When the natural rubber is modified, it is preferably a modified natural rubber having a nitrogen content of 0.1 to 0.3 mass%, for example. It is also preferable that the modified natural rubber is one from which protein has been removed by a centrifugation process, an enzyme treatment, or a urea treatment. Furthermore, it is preferable that the phosphorus content in the modified natural rubber is more than 200 ppm and 900 ppm or less. Furthermore, a filler, such as carbon black, may be contained in the coating rubber as long as the adhesion, durability, or other performance of the coating rubber is not affected. As the carbon black, one or more carbon black selected from carbon black of the SRF, GPF, FEF, HAF, ISAF, and SAF classes may be blended. Furthermore, the content of carbon black in the coating rubber may be 40 to 70 parts by mass per 100 parts by mass of the rubber component. The carbon black may also be recycled carbon black. Additionally, the coating rubber may appropriately contain, besides the above-mentioned components, crosslinking system agents such as vulcanization accelerators, sulfur, and zinc oxide; adhesion promoters such as cobalt compounds containing cobalt salts; antioxidants; oils; resins; and the like. Examples of the antioxidants include amine-based antioxidants such as 6PPD and bisphenol-based antioxidants such as o-MBp14. These antioxidants may be used alone or in combination of two or more types.

In this specification, "recycled carbon black" refers to carbon black obtained by recovering carbon black from waste materials subjected to recycling. Examples of such waste materials subjected to recycling include rubber products containing carbon black, particularly vulcanized rubber products, represented by used rubber and used tires, as well as waste oil. Recycled carbon black differs from carbon black produced directly from hydrocarbons such as petroleum or natural gas, that is, carbon black that is not recycled. It should be noted that "used" in this context includes not only materials that were discarded after actual use, but also materials that were manufactured but discarded without actual use.

<Manufacturing Method of Tire>

The tire of the present embodiment can be obtained by molding an uncured rubber composition, an uncured treat (a cord-rubber composite in which cords are coated with rubber), etc., followed by vulcanization, depending on the type of tire to be applied. Alternatively, the tire may also be obtained by molding semi-vulcanized rubber that has undergone a pre-vulcanization step, instead of using an uncured rubber composition, followed by final vulcanization.

The members other than the tread rubber layer and the reinforcing layer including the organic fiber cord of the tire of the present embodiment are not particularly limited, and known materials can be used for other components.

The tire of the present embodiment is preferably a pneumatic tire. The pneumatic tire may be filled with ordinary air or air with an adjusted partial pressure of oxygen, or may also be filled with an inert gas such as nitrogen, argon, or helium.

EXAMPLES

The present disclosure will be described in more detail with reference to the following examples, but the present disclosure is not limited to the examples below.

<Analysis Methods for Rubber Component>

The glass transition temperature (Tg) and bound styrene content of styrene-butadiene rubber (SBR) were measured using the following methods. The SP value (solubility parameter) of natural rubber (isoprene skeleton rubber) and styrene-butadiene rubber (SBR) was calculated according to the Fedor method.

(1) Glass Transition Temperature (Tg)

The synthesized styrene-butadiene rubber (SBR) was used as a sample, and the glass transition temperature was determined using a DSC250 manufactured by TA Instruments by recording the DSC curve under a helium flow of 50 mL/min while it was heated from -100°C at a rate of 20°C/minute. The peak top (inflection point) of the DSC differential curve was defined as the glass transition temperature.

(2) Bound Styrene Content

The synthesized styrene-butadiene rubber (SBR) was used as a sample, and 100 mg of the sample was diluted with 100 mL of chloroform to dissolve the SBR, thereby preparing a measurement sample. The bound styrene content (mass%) per 100 mass% of the sample was determined based on the amount of UV absorption by the phenyl group of styrene at a UV absorption wavelength of approximately 254 nm. The measurement device used was a spectrophotometer UV-2450 manufactured by Shimadzu Corporation.

<Analysis Methods for Resin Component>

The softening point and weight-average molecular weight of the resin component were measured using the following methods. The SP value (solubility parameter) of the resin component was calculated using the Fedor method.

(3) Softening Point

The softening point of the resin component was measured according to JIS-K2207-1996 (Ring and Ball Method).

(4) Weight-Average Molecular Weight

The weight-average molecular weight of the resin component was measured by gel permeation chromatography (GPC) under the following conditions, and the polystyrene-equivalent weight-average molecular weight (Mw) was calculated.

- Column temperature: 40°C
- Injection volume: 50 μL
- Carrier and flow rate: Tetrahydrofuran at 0.6 mL/min
- Sample preparation: About 2.5 mg of the resin component was dissolved in 10 mL of tetrahydrofuran

<Preparation of Rubber Composition>

The rubber compositions of the examples and comparative examples were prepared by compounding and kneading each component according to the formulation summarized in Table 1. It should be noted that the compounding amounts of natural rubber, SBR, and resin components in each example and comparative example are summarized in Table 3.

[Table 1]

| | Amount (parts by mass) |
|---|---|
| Natural rubber *1 | Varied |
| SBR *2 | Varied |
| Filler *3 | 65.0 |
| Resin component *4 | Varied |
| Silane coupling agent *5 | 6.5 |
| Antioxidant *6 | 2.0 |
| Wax *7 | 2.0 |
| Zinc white | 2.0 |
| Vulcanization accelerator A *8 | 0.8 |
| Vulcanization accelerator B *9 | 1.7 |
| Sulfur | 1.4 |

*1 Natural Rubber: TSR#20, Tg = -56°C, SP value = 8.20 $(cal/cm^3)^{1/2}$
*2 SBR: Hydrocarbyloxy silane compound-modified styrene-butadiene rubber synthesized by the method described below, bound styrene content = 10 mass%, Tg = -65°C, SP value = 8.65 $(cal/cm^3)^{1/2}$
*3 Filler: Silica, trade name "Nipsil AQ" manufactured by Tosoh Silica Co., Ltd.
*4 Resin component: Hydrogenated $C_5$-based resin, trade name "Impera® E1780" manufactured by Eastman Company, softening point = 130°C, weight-average molecular weight (Mw) = 909 g/mol, SP value = 8.35 $(cal/cm^3)^{1/2}$
*5 Silane coupling agent: trade name "Si75" manufactured by Evonik Degussa Japan Co., Ltd.
*6 Antioxidant: trade name "NOCRAC 6C" manufactured by Ouchi Shinko Chemical Industrial Co., Ltd.
*7 Wax: trade name "Ozoace-0701" manufactured by Nippon Seiro Co., Ltd.
*8 Vulcanization accelerator A: "NOCCELER DM-P" manufactured by Ouchi Shinko Chemical Industrial Co., Ltd.
*9 Vulcanization accelerator B: trade name "Sanceler NS-G" manufactured by Sanshin Chemical Industry Co., Ltd.

<Synthesis Method of SBR (*2)>

In an 800 mL pressure-resistant glass vessel that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-ditetrahydrofurylpropane was added, and 0.8 mmol of n-butyllithium was added. Subsequently, the mixture was polymerized for 1.5 hours at 50°C. Next, 0.72 mmol of N,N-bis(trimethylsilyl)-3-[diethoxy(methyl)silyl]propylamine was added as a modifying agent to the polymerization reaction system when the polymerization conversion ratio reached nearly 100%, and a modification reaction was carried out for 30 minutes at 50°C. Subsequently, the reaction was stopped by adding 2 mL of an isopropanol solution containing 5 mass% of 2,6-di-t-butyl-p-cresol (BHT), and the result was dried with a regular method to obtain an SBR (modified SBR).

A measurement of the microstructure of the obtained modified SBR indicated that the bound styrene content was 10 mass% and the glass transition temperature (Tg) was -65°C.

<Evaluation of Reinforcing Layer Including Organic Fiber Cord>

Organic fiber cords, of which specifications and structures are summarized in Table 2, were prepared, and the rigidity of the cord alone was calculated.

(5) Calculation of Rigidity of Cord Alone

The rigidity of the cord alone was expressed an index by taking the elastic modulus at 1-2% elongation of a nylon cord as 100.

[Table 2]

| | | Nylon cord *10 | PET cord *11 |
|---|---|---|---|
| Elastic modulus at 1-2 % elongation | mN/(dtex·%) | 3.5 | 5.2 |
| Elastic modulus at 7% elongation | mN/(dtex·%) | 4.0 | 7.0 |
| Breaking strength | cN/dtex | 8.1 | 7 |
| Breaking elongation | % | 18.7 | 10.7 |
| Rigidity of cord alone | Index | 100 | 150 |
| *10 Nylon cord: Cord made of 6,6-nylon<br>*11 PET cord: Cord made of polyethylene terephthalate | | | |

<Production and Evaluation of Vulcanized Rubber>

The resulting rubber compositions of the examples and comparative examples were vulcanized to obtain vulcanized rubber test specimens. The wet braking performance, high fuel efficiency, and steering stability of the obtained vulcanized rubber test specimens were evaluated using the following methods. The results are summarized in Table 3.

(6) Evaluation of Wet Braking Performance

The friction coefficient of the test specimens on a wet asphalt surface was measured using a portable friction tester. The evaluation results were indicated as index values taking the friction coefficient of Comparative Example 1 as 100. A higher index value indicates a higher friction coefficient, meaning better wet braking performance.

(7) Evaluation of High Fuel Efficiency

The loss tangent (tan δ) of the test specimens was measured using a rheometric measurement device (manufactured by Rheometrics, Inc.) under the conditions of a temperature of 50°C, a strain of 1%, and a frequency of 52 Hz. The evaluation results were indexed taking the reciprocal of the tan δ value of Comparative Example 1 as 100. A larger index value indicates smaller tan δ, indicating more excellent high fuel efficiency.

(8) Evaluation of Steering Stability

The storage modulus (E') of the test specimens was measured using a rheometric measurement device (manufactured by Rheometrics, Inc.) under the conditions of a temperature of 30°C, a strain of 1%, and a frequency of 52 Hz. The evaluation results are indicated as index values taking the storage modulus (E') of Comparative Example 1 as 100. The index of the steering stability is calculated based on the obtained calculated value of the storage modulus (E') and the index of the rigidity of the organic fiber cord alone according to the following formula.

Index of steering stability = calculated storage modulus (E') + index of rigidity of organic fiber cord alone - 100

In other words, the index of the steering stability represents the sum of the improvement margin of the calculated storage modulus (E'), the improvement margin of the index of the rigidity of the organic fiber cord alone, and 100. If any of the calculated value or index is smaller relative to the reference, the improvement margin takes a negative value. A higher index value of the steering stability indicates better steering stability.

[Table 3]

| | | | Example 1 | Example 2 | Comparative Example 1 | Comparative Example 2 | Comparative Example 3 |
|---|---|---|---|---|---|---|---|
| Tread rubber layer | Natural rubber *1 | parts by mass | 30 | 30 | 70 | 70 | 30 |
| | SBR *2 | parts by mass | 70 | 70 | 30 | 30 | 70 |
| | Resin component *4 | parts by mass | 30 | 45 | 30 | 15 | 15 |
| | Mass ratio of resin component/natural rubber | - | 1.00 | 1.50 | 0.43 | 0.21 | 0.50 |
| Reinforcing layer | Type of cord | - | PET cord *11 | PET cord *11 | Nylon cord *10 | Nylon cord *10 | Nylon cord *10 |
| Tire Perfor-mances | Wet braking perfor-mance | Index | 104 | 109 | 100 | 92 | 100 |
| | High fuel efficiency | Index | 104 | 102 | 100 | 103 | 108 |
| | Steering stability | Index | 114 | 108 | 100 | 109 | 99 |
| | Overall performance | Index | 322 | 318 | 300 | 304 | 307 |
| *1, *2, and *4 are the same as *1, *2, and *4 in Table 1.<br>*10 and *11 are the same as *10 and *11 in Table 2. | | | | | | | |

The rigidity among the rubber properties in Examples 1 and 2 according to the present disclosure was lower than that of Comparative Example 1. However, the steering stability among the tire performances was improved because the mass ratio of the resin component to natural rubber was 0.5 or more and the elastic modulus at 1-2% elongation of the organic fiber cord in the reinforcing layer was 4.0 to 30 mN/(dtex·%). At the same time, the wet braking performance and fuel efficiency were excellent.

On the other hand, in Comparative Example 2, although the steering stability was improved, the wet braking performance was reduced because the mass ratio of the resin component to natural rubber was less than 0.5.

Additionally, in Comparative Example 3, although the mass ratio of the resin component to natural rubber is 0.5 or more, the fuel efficiency was excellent but the wet braking performance and steering stability were not improved because the elastic modulus at 1-2% elongation of the organic fiber cord in the reinforcing layer was outside the range of 4.0 to 30 mN/(dtex·%).

REFERENCE SIGNS LIST

1: Tire, 2: Bead portion, 3: Sidewall portion, 4: Tread portion, 5: Carcass, 6: Belt, 6A, 6B: Belt layer, 7A, 7B: Belt reinforcing layer, 8: Bead core, 9: Tread rubber layer, C: Load-elongation curve of the cord, S: Tangent at the point corresponding to 7% elongation on the load-elongation curve of the cord

## Claims

**1.** A tire comprising a tread rubber layer located at an outermost surface of a tread portion, and a reinforcing layer that is located inward of the tread rubber layer in a tire radial direction and comprises an organic fiber cord,

wherein the tread rubber layer comprises a rubber component, a resin component, and a filler,
the rubber component comprises an isoprene skeleton rubber and a styrene-butadiene rubber,
a glass transition temperature of at least one type of the styrene-butadiene rubber is lower than -40°C,

the resin component has a difference of an SP value relative to an SP value of the isoprene skeleton rubber of 1.40 $(cal/cm^3)^{1/2}$ or less,
the tread rubber layer satisfies the following formula (1):

$$\text{a mass ratio of the resin component / the isoprene skeleton rubber} \geq 0.5 \quad (1),$$

and
the organic fiber cord in the reinforcing layer has an elastic modulus at 1-2% elongation of 4.0 to 30 mN/(dtex·%).

**2.** The tire according to claim 1, wherein the resin component has a softening point of higher than 110°C and a polystyrene-equivalent weight-average molecular weight of 200 to 1600 g/mol.

**3.** The tire according to claim 1, wherein the resin component is at least one selected from the group consisting of hydrogenated $C_5$-based resins, hydrogenated $C_5/C_9$-based resins, hydrogenated dicyclopentadiene-based resins, and hydrogenated terpene-based resins.

**4.** The tire according to claim 1, wherein the styrene-butadiene rubber is modified with a modifier having a functional group containing a nitrogen atom and an alkoxy group.

**5.** The tire according to claim 1, wherein the organic fiber cord has a breaking strength of 6.5 cN/dtex or more and a breaking elongation of 10% or more.

**6.** The tire according to claim 1, wherein the organic fiber cord is a cord made of polyethylene terephthalate.

**7.** The tire according to claim 1, wherein the organic fiber cord has an elastic modulus at 7% elongation of 6.0 mN/(dtex·%) or more.

FIG. 1

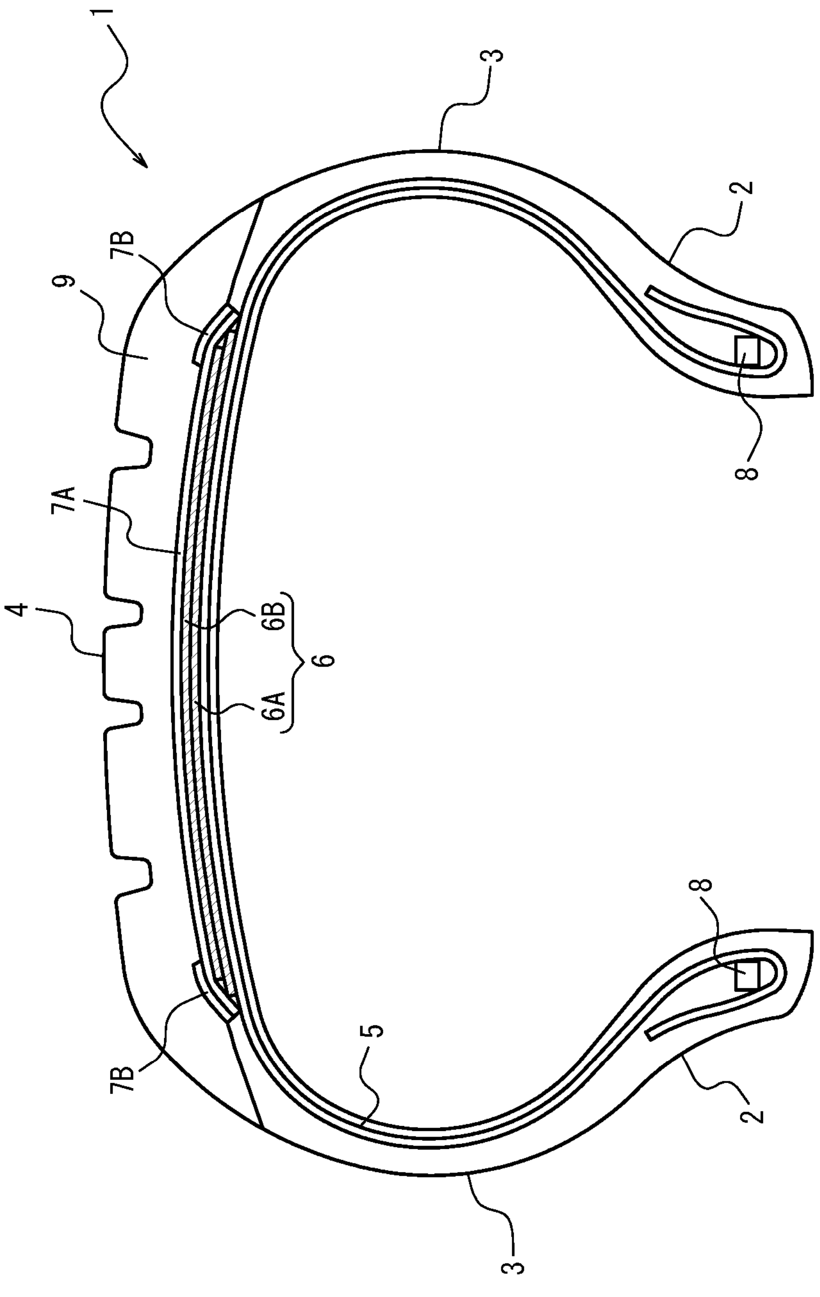

FIG. 2

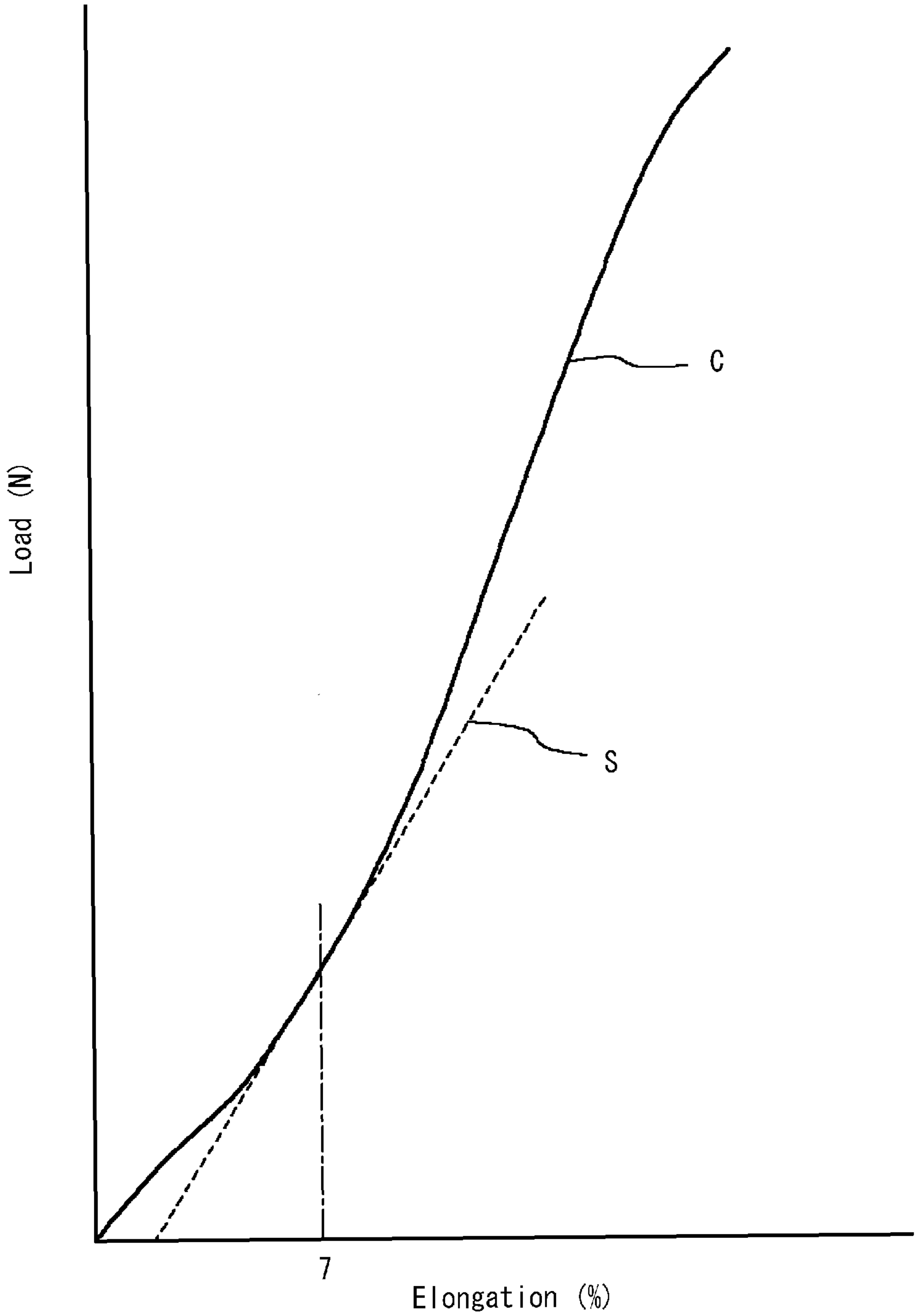

## INTERNATIONAL SEARCH REPORT

International application No.
**PCT/JP2023/042077**

**A. CLASSIFICATION OF SUBJECT MATTER**

***B60C 9/22***(2006.01)i; ***B60C 1/00***(2006.01)i; ***B60C 9/00***(2006.01)i; ***C08L 7/00***(2006.01)i; ***C08L 9/06***(2006.01)i; ***C08L 15/00***(2006.01)i
FI: B60C9/22 C; B60C1/00 A; B60C9/00 B; B60C9/22 D; C08L7/00; C08L9/06; C08L15/00

According to International Patent Classification (IPC) or to both national classification and IPC

**B. FIELDS SEARCHED**

Minimum documentation searched (classification system followed by classification symbols)

B60C9/22; B60C1/00; B60C9/00; C08L7/00; C08L9/06; C08L15/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-131648 A (SUMITOMO RUBBER IND., LTD.) 08 August 2019 (2019-08-08) entire text | 1-7 |
| A | JP 2017-19461 A (TOYO TIRE & RUBBER CO., LTD.) 26 January 2017 (2017-01-26) entire text | 1-7 |
| A | JP 2003-146014 A (THE YOKOHAMA RUBBER CO., LTD.) 21 May 2003 (2003-05-21) entire text | 1-7 |
| A | WO 2021/205874 A1 (THE YOKOHAMA RUBBER CO., LTD.) 14 October 2021 (2021-10-14) entire text | 1-7 |
| A | JP 2005-330319 A (THE YOKOHAMA RUBBER CO., LTD.) 02 December 2005 (2005-12-02) entire text | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/042077**

**C. DOCUMENTS CONSIDERED TO BE RELEVANT**

| Category* | Citation of document, with indication, where appropriate, of the relevant passages | Relevant to claim No. |
|---|---|---|
| A | WO 2016/171020 A1 (SUMITOMO RUBBER IND., LTD.) 27 October 2016 (2016-10-27) entire text | 1-7 |
| A | WO 2017/018386 A1 (SUMITOMO RUBBER IND., LTD.) 02 February 2017 (2017-02-02) entire text | 1-7 |

Form PCT/ISA/210 (second sheet) (July 2022)

**INTERNATIONAL SEARCH REPORT**
**Information on patent family members**

International application No.
**PCT/JP2023/042077**

| Patent document cited in search report | Publication date (day/month/year) | Patent family member(s) | Publication date (day/month/year) |
|---|---|---|---|
| JP 2019-131648 A | 08 August 2019 | (Family: none) | |
| JP 2017-19461 A | 26 January 2017 | (Family: none) | |
| JP 2003-146014 A | 21 May 2003 | US 2003/0121583 A1 | |
| WO 2021/205874 A1 | 14 October 2021 | EP 4134247 A1<br>CN 115379956 A | |
| JP 2005-330319 A | 02 December 2005 | (Family: none) | |
| WO 2016/171020 A1 | 27 October 2016 | US 2018/0105683 A1<br>EP 3281979 A1<br>CN 107429008 A | |
| WO 2017/018386 A1 | 02 February 2017 | US 2018/0362741 A1<br>EP 3305843 A1<br>CN 107849315 A<br>RU 2018101088 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015079703 A1
- WO 2003046020 A1
- JP 2007217562 A
- JP 2019038728 A
- JP 2023040157 A
- JP 2023030762 A
- WO 2022130879 A1